# EUROPÄISCHE PATENTANMELDUNG

(11) **EP 2 423 620 A2**
(43) Veröffentlichungstag der Anmeldung: **29.02.2012**
(21) Anmeldenummer: 11176054.2
(22) Anmeldetag: 29.07.2011
(51) Int. Cl.: F24J 2/52, F16B 25/00, F16B 33/02

(54) **Selbstbohrende Schrauben zum Befestigen von Solarpaneelen**

(30) Priorität: 26.08.2010 DE 102010039843
(71) Anmelder: BB Stanz-und Umformtechnik GmbH, 06536 Berga (DE)
(72) Erfinder: Humm, Siegfried, 74214 Schöntal Westernhausen (DE); Blesch, Günther, 97957 Assamstadt (DE)
(74) Vertreter: Dilg, Haeusler, Schindelmann Patentanwaltsgesellschaft mbH

(57) **Zusammenfassung**

Befestigungsanordnung (700) zum Montieren eines Solarpaneels (2500) an einem Dach (2400), wobei die Befestigungsanordnung (700) ein Bodenteil (2402) zum Anbringen an dem Dach (2400), einen an dem Bodenteil (2402) angebrachten Haltebügel (100), und mindestens eine Profilschiene (200, 702) zum Anbringen an dem Haltebügel (100) mittels mindestens eines ersten Befestigungsmittels (2800) aufweist, wobei das Solarpaneel (2500) mittels eines zweiten Befestigungsmittels (2800) an der mindestens einen Profilschiene (200, 702) montierbar ist, wobei eine Mehrzahl aus der Gruppe des mindestens einen ersten Befestigungsmittels (2800) und des zweiten Befestigungsmittels (2800) eine selbstbohrende Schraube aufweist oder daraus besteht, die durch zumindest eine der jeweiligen aneinander anzubringenden Komponenten (100, 200, 702, 2500) schraubbar ist.

## Beschreibung

Die Erfindung betrifft eine Befestigungsanordnung. Die Erfindung betrifft ferner ein Verfahren zum Montieren eines Solarpaneels an einem Dach. Die Erfindung betrifft außerdem eine Verwendung selbstbohrender und vorzugsweise auch gewindeschneidender Schrauben zum Montieren eines Solarpaneels.

Solarbefestiger werden eingesetzt, um Solarpaneele an einem Hausdach zu befestigen. Aus dem Stand der Technik sind eine Reihe von Solarbefestigern bekannt, siehe zum Beispiel DE 202009002134 U1, DE 102005043957 B3, DE 202009000960 U1, DE 202007015887 U1 oder DE 202008016000 U1.

DE 10 2009 008 683 A1offenbart eine Solarmodulbefestigung für ein Solarmodul. Die Solarmodulbefestigung weist eine Tragschiene auf, welche mittels mehrerer Halter an den erhabenen Abschnitten eines Trapezblechs eines Dachs befestigt wird. An der Tragschiene bzw. an mehreren in gleicher Weise an dem Trapezblech befestigten Tragschienen können Solarmodule befestigt werden. Zur Befestigung des Halters an dem Trapezblech werden vorzugsweise selbstbohrende Schrauben als Befestigungsmittel verwendet.

DE 10 2008 007 334 A1 offenbart ein Befestigungssystem für ein plattenförmiges Bauelement (z.B. eine Solarmodul) an einer Stützleiste einer Dachkonstruktion. Dabei wird das plattenförmige Bauelement von insgesamt vier Trägerprofilen eingefasst, welche einen firstseitigen Querträger, einen traufseitigen Querträger und zwei Längsträger umfassen. Der firstseitige Querträger und der traufseitige Querträger sind derart ausgebildet, dass ein einem ersten Bauelement zugeordneter firstseitiger Querträger mit einem einem zweiten Bauelement zugeordneten traufseitigen Querträger in Eingriff gebracht werden kann. Mittels selbstschneidenden Schrauben, die jeweils einen Längsträger durchdringen und in aufgeschlitzte Röhren der Querträger eingreifen, werden die Längsträger an den beiden Querträgern befestigt.

DE 10 2006 012 254 A1 offenbart eine Befestigungsvorrichtung, um Solarmodule auf Dächern anzubringen. Die Befestigungsvorrichtung weist einen Grundträger auf, der mittels einer Holzschraube an einem Dachbalken angebracht werden kann. Die Befestigungsvorrichtung weist ferner einen geschwungenen Dachhaken auf, der an seinem unteren Ende einen Gewindeabschnitt aufweist, welcher in eine Gewindebohrung des Grundträgers eingreift. Ferner weist die Befestigungsvorrichtung ein Trägerprofil auf, welches mittels einer Schraubverbindung an einem oberen Ende des Dachhakens angebracht ist. Das Trägerprofil kann Nutensteine aufnehmen, welche für eine Befestigung eines Solarmoduls an dem Trägerprofil verwendet werden. Um ein Verkippen des Grundträgers zu vermeiden, ist wenigstens ein (Quer)Ausleger vorgesehen, der an seinem abstehenden Ende an dem Dachbalken befestigt werden kann.

DE 10 2006 000 090 A1 offenbart eine Vorrichtung zum Befestigen eines Trägerprofils an einer Dachunterkonstruktion, wobei das Trägerprofil von der Dachunterkonstruktion beabstandet ist. Die Befestigungsvorrichtung weist einen Dachhaken auf, der eine Befestigungsplatte und einen im Wesentlichen parallel zur Befestigungsplatte angeordneten Festlegeabschnitt umfasst. Die Befestigungsvorrichtung weist ferner ein Befestigungsmittel für das Trägerprofil auf. Das Befestigungsmittel , welches sich an dem Festlegeabschnitt 14 befindet, umfasst eine Befestigungsschraube und ein Halteelement, das einen Halteabschnitt für das Trägerprofil sowie eine Durchführöffnung für die Befestigungsschraube aufweist.

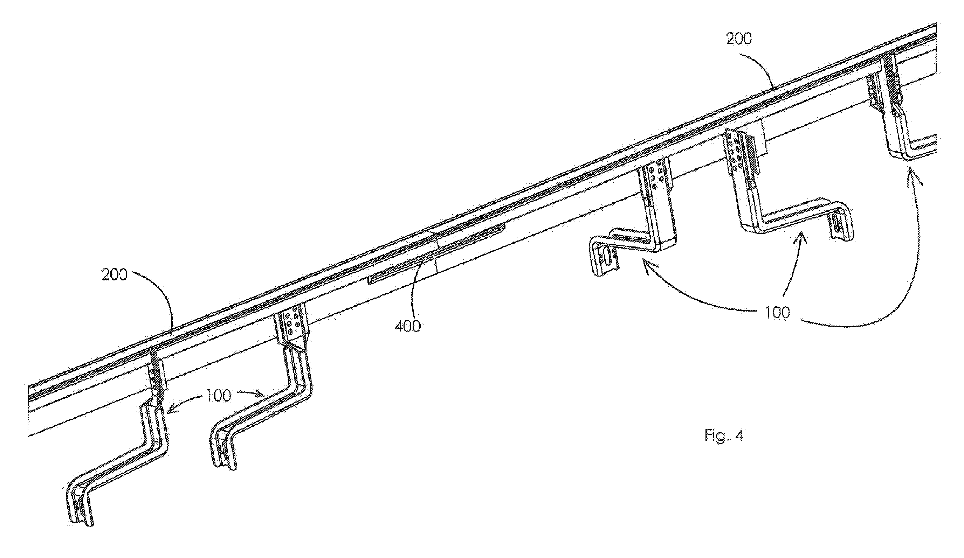

DE 20 2009 016 159 offenbart eine Vorrichtung zur Befestigung eines Solarmoduls auf einer gewellten Dacheindeckung. Die Vorrichtung weist ein Band auf, welches eine Länge hat, die der Breite des Solarmoduls entspricht. Das Band weist einen umgeknickten Längsrand auf, welcher dem Band eine gewisse Stabilität gibt. An einem Ende weist das Band einen Schuh und an einem anderen Ende weist das Band eine Lasche auf, an der ein L-Winkel festgeschraubt werden kann. Im montierten Zustand wird das Solarmodul von dem Band getragen und von dem Schuh und dem L-Winkel festgehalten. Das Band liegt auf einer Erhebung der gewellten Dacheindeckung auf und wird mittels einer Schraube an einer Holzlatte einer Dachunterkonstruktion befestigt. Dabei kann die Schraube in eine Metallprofilschiene (vgl. Figur 4) eingreifen, welche an der Oberseite der Dachlatte angebracht ist. Um ein Durchdrücken der gewellten Dacheindeckung zu verhindern, ist eine Hülse vorgesehen, welche die Schraube umgibt. Die Schraube, welche in die Metallprofilschiene eingreift, kann eine selbstschneidende Schraube sein.

Die Montage von Solarpaneelen unter Verwendung von herkömmlichen Befestigern mit Haltebügel ist häufig aufwendig.

Es ist eine Aufgabe der vorliegenden Erfindung, bei geringem Montageaufwand eine stabile Befestigung eines Solarpaneels an einem Dach zu ermöglichen.

Diese Aufgabe wird durch eine Befestigungsanordnung, durch ein Verfahren zum Montieren eines Solarpaneels an einem Dach und durch eine Verwendung selbstbohrender und vorzugsweise auch gewindeschneidender Schrauben zum Montieren eines Solarpaneels mit den Merkmalen gemäß den unabhängigen Patentansprüchen gelöst.

Gemäß einem Ausführungsbeispiel der vorliegenden Erfindung ist eine Befestigungsanordnung (oder eine Montage-Anordnung) zum Montieren mindestens eines Solarpaneels an einem Dach geschaffen, wobei die Befestigungsanordnung mindestens ein Bodenteil zum (insbesondere direkten, das heißt ohne eine weitere Zwischenkomponente) Anbringen an dem Dach, mindestens einen an dem mindestens einen Bodenteil angebrachten Haltebügel (insbesondere vormontiert oder mit dem Bodenteil einstückig gebildet), und mindestens eine Profilschiene zum (insbesondere direkten) Anbringen an dem mindestens einen Haltebügel mittels mindestens eines ersten Befestigungsmittels aufweist, wobei das mindestens eine Solarpaneel mittels mindestens eines zweiten Befestigungsmittels (direkt, das heißt ohne eine weitere Zwischenkomponente, oder indirekt, das heißt unter Zwischenschaltung mindestens einer weiteren Zwischenkomponente) an der mindestens einen Profilschiene montierbar ist, wobei eine Mehrzahl aus der Gruppe des mindestens einen ersten Befestigungsmittels und des mindestens einen zweiten Befestigungsmittels eine selbstbohrende und vorzugsweise auch gewindeschneidende Schraube aufweist oder daraus besteht, wobei die jeweilige selbstbohrende und vorzugsweise auch gewindeschneidende Schraube (insbesondere vorbohrungsfrei) durch zumindest eine (oder beide) der jeweiligen aneinander anzubringenden Komponenten schraubbar ist.

Gemäß einem anderen Ausführungsbeispiel der vorliegenden Erfindung ist ein Verfahren zum Montieren mindestens eines Solarpaneels an einem Dach bereitgestellt, wobei bei dem Verfahren mindestens ein Bodenteil an dem Dach angebracht wird, wobei mindestens ein Haltebügel an dem mindestens einen Bodenteil angebracht ist, mindestens eine Profilschiene an dem mindestens einen Haltebügel mittels mindestens eines ersten Befestigungsmittels angebracht wird, und das mindestens eine Solarpaneel mittels mindestens eines zweiten Befestigungsmittels an der mindestens einen Profilschiene montiert wird, wobei eine Mehrzahl aus der Gruppe des mindestens einen ersten Befestigungsmittels und des mindestens einen zweiten Befestigungsmittels eine selbstbohrende und vorzugsweise auch gewindeschneidende Schraube aufweist oder daraus besteht, wobei die jeweilige selbstbohrende und vorzugsweise auch gewindeschneidende Schraube durch zumindest eine der jeweiligen aneinander anzubringenden Komponenten schraubbar ist.

Gemäß einem weiteren Ausführungsbeispiel der vorliegenden Erfindung werden selbstbohrende und vorzugsweise auch gewindeschneidende Schrauben zum Anbringen der mindestens einen Profilschiene an dem mindestens einen Haltebügel, und zum Montieren des mindestens einen Solarpaneels an der mindestens einen Profilschiene verwendet, das heißt als erstes und zweites Befestigungsmittel selbstbohrende und vorzugsweise auch gewindeschneidende Schrauben verwendet. Der mindestens eine Haltebügel ist an mindestens einem an einem Dach montierten Bodenteil angebracht (insbesondere daran vormontiert oder mit dem Bodenteil einstückig gebildet).

Im Rahmen dieser Beschreibung kann unter dem Begriff "Solarpaneel" insbesondere eine Photovoltaikanlage oder ein thermischer Solarkollektor verstanden werden. Ein Solarpaneel kann ein Photovoltaikmodul oder ein Solarthermiemodul sein. Ein Photovoltaikmodul wandelt Licht der Sonne in elektrische Energie um. Als funktionelle Bestandteile enthält es mehrere Solarzellen. Unter Solarthermie versteht man die Umwandlung der Sonnenenergie in nutzbare Wärmeenergie. Insbesondere kann ein Solarpaneel eine flächige plattenartige Anordnung sein, die an einer Unterlage wie zum Beispiel einem Dach (insbesondere an Dachsparren) gehalten werden soll.

Im Rahmen dieser Beschreibung kann unter dem Begriff "Profilschiene" insbesondere eine starre Struktur verstanden werden, die einen Aufnahmeabschnitt aufweisen kann, an dem ein Gegenstand (wie ein Solarpaneel oder ein Zwischenstück) gehalten werden kann. Zum Beispiel kann eine solche Profilschiene ein Strangpressprofil sein, zum Beispiel aus Aluminium gefertigt, das bei geringem Gewicht eine hohe Stabilität aufweist. Insbesondere kann die Profilschiene als langgestreckter Körper ausgeführt sein, dessen Länge in einer Haupterstreckungsrichtung mindestens fünfmal, insbesondere mindestens zehnmal, so groß sein kann wie eine Erstreckung in einer Montagerichtung. Unter einer Montagerichtung kann in diesem Zusammenhang eine Richtung verstanden werden, entlang welcher die Profilschiene relativ zu dem Haltebügel bewegt werden kann, um eine Höheneinstellung vorzunehmen. Zum Beispiel kann eine Profilschiene eine Länge von mindestens 1 m, insbesondere von mindestens 3 m, weiter insbesondere von mindestens 5 m, aufweisen. Die Profilschiene kann zum Beispiel mit mindestens zwei Haltebügeln an der Unterlage befestigt sein. Die Profilschiene kann ein über einer Dachhaut anzuordnendes Traggerüst zum Tragen des Gegenstands bilden.

Unter dem Begriff "Haltebügel" kann insbesondere eine Haltestruktur verstanden werden, die in einem ersten (unteren) Bereich an einem Bodenteil befestigt sein kann und in einem zweiten (oberen) Bereich zum Tragen der Profilschiene eingesetzt werden kann. Somit kann der Haltebügel zum Stützen und zum Überbrücken eines Abstands zwischen dem Dach und dem Solarpaneel dienen. Der Haltebügel kann mit einem Boden- oder Fußteil verbunden sein, das wiederum unmittelbar auf der Unterlage befestigt werden kann.

Im Rahmen dieser Beschreibung kann unter dem Begriff "Bodenteil" insbesondere ein Bauteil verstanden werden, das direkt an einem Dach, insbesondere an einem Dachsparren (das aus Holz gefertigt sein kann), montiert werden kann. Ein solches Bodenteil kann somit einen Bodenplattenabschnitt aufweisen, der Durchgangslöcher zum Durchführen von Schrauben, wie zum Beispiel Holzschrauben, zum Befestigen des Bodenteils an dem Dach haben kann. Ferner kann das Bodenteil einen winkelig, insbesondere rechtwinkelig, zu der Bodenplatte angeordneten Befestigungsabschnitt aufweisen, der an einem bodenseitigen Endabschnitt eines Haltebügels befestigt werden kann.

Im Rahmen dieser Beschreibung kann unter dem Begriff "Befestigungsmittel" insbesondere jede körperliche Struktur verstanden werden, die durch zwei zu befestigende Komponenten hindurchgeführt werden kann und die gegenseitige Befestigung bewirken. Als Befestigungsmittel können zum Beispiel Schrauben, Nägel, Nieten oder dergleichen verwendet werden. Insbesondere kommen als Befestigungsmittel selbstbohrende und vorzugsweise auch gewindeschneidende Schrauben in Betracht.

Die aneinander anzubringenden Komponenten sind jeweils ein Paar, das gebildet sein kann aus Haltebügel und Profilschiene, einer Profilschiene und einer anderen Profilschiene, und Profilschiene und Solarpaneel.

Unter einer "selbstbohrenden Schraube" wird im Rahmen dieser Anmeldung insbesondere eine Schraube verstanden, die durch eine oder beide der zu verbindenden Komponenten insbesondere ohne vorherige Vorbohrung hindurchgebohrt werden kann, womit sich die Schraube durch die jeweilige Komponente ihr eigenes Loch hindurchbohrt. Eine selbstbohrende Schraube kann zusätzlich auch als selbstschneidende Schraube ausgebildet sein. Unter einer "selbstschneidenden Schraube" wird im Rahmen dieser Anmeldung insbesondere eine Schraube verstanden, die durch eine oder beide der zu verbindenden Komponenten hindurchgeführt werden kann und sich dabei ihr eigenes Gewinde schneidet.

Gemäß einem exemplarischen Ausführungsbeispiel der Erfindung ist eine Befestigungsanordnung bereitgestellt, bei der das Verbinden benachbarter Komponenten, insbesondere das Verbinden aller oberhalb eines Bodenteils bzw. eines Haltebügels angeordneter Komponenten, mittels selbstbohrender und vorzugsweise auch gewindeschneidender Schrauben bewerkstelligt wird. Dadurch ist eine Einmannmontage ermöglicht, da aufwendige und teure Befestigungssysteme vermieden sein können. Es ist ausreichend, die beiden jeweils miteinander zu verbindenden Komponenten aneinander zu halten und dann zum Beispiel mittels eines geeigneten Schraubendrehers die selbstbohrende und vorzugsweise auch gewindeschneidende Schraube durch die beiden Komponenten hindurch zu bohren und dadurch aneinander zu befestigen. Selbst das vorherige Bilden einer Vorbohrung in einer der oder in beiden Komponenten kann dann entbehrlich sein. Durch die erfindungsgemäßen Maßnahmen kann der Montageaufwand verringert werden, da zumindest zwei Komponenten ausschließlich mittels selbstbohrender und vorzugsweise auch gewindeschneidender Schrauben verbunden werden. Die Anzahl von einem Monteur mitzuführender Montageteile kann dadurch sehr klein gehalten werden.

Im Weiteren werden zusätzliche Ausgestaltungen der Befestigungsanordnung beschrieben. Diese gelten auch für das Verfahren und die Verwendung.

Gemäß einem Ausführungsbeispiel sind die Schrauben selbstbohrend und vorzugsweise auch selbstschneidend. Wenn nur selbstschneidende Schrauben verwendet würden, müsste vorher mit einem Bohrer ein Loch gebohrt werden, was zusätzlichen Montageaufwand bedeuten würde, der erfindungsgemäß entbehrlich ist.

Gemäß einem Ausführungsbeispiel kann das mindestens eine erste Befestigungsmittel mindestens eine selbstbohrende und vorzugsweise auch gewindeschneidende Schraube zum Anbringen der mindestens einen Profilschiene an dem mindestens einen Haltebügel aufweisen. Das zweite Befestigungsmittel kann eine selbstbohrende und vorzugsweise auch gewindeschneidende Schraube zum Anbringen des mindestens einen Solarpaneels an der mindestens einen Profilschiene aufweisen. Durch diese Maßnahme ist es möglich, alle Komponenten zwischen Haltebügel und Solarpaneel ausschließlich unter Verwendung von selbstbohrenden und vorzugsweise auch gewindeschneidenden Schrauben als Befestigungsmittel miteinander sicher zu verankern, so dass keine andersartigen Befestigungsmittel zum Befestigen dieser Komponenten aneinander mitgeführt werden müssen, wobei es besonders vorteilhaft ist, wenn für alle Befestigungen dasselbe Befestigungsmittel verwendet wird, eventuell mit variabler Länge.

Gemäß einem Ausführungsbeispiel kann die selbstbohrende und vorzugsweise auch selbstschneidende Schraube einen Befestigungsbereich (insbesondere einen rostbeständigen Befestigungsbereich) haben, der im montierten Zustand innerhalb zumindest einer der aneinander anzubringenden Komponenten verbleiben kann. Ein Bohrbereich (insbesondere ein gehärteter Bohrbereich) der Schraube dient zum Durchbohren von mindestens einer der aneinander anzubringenden Komponenten. Eine solche Schraube weist insbesondere zwei getrennte Bereiche, nämlich den Befestigungsbereich und den Bohrbereich auf, die auf ihre jeweilige Funktion hin zugeschnitten sein können. Der Befestigungsbereich verbleibt dauerhaft im Inneren einer oder vorteilhaft beider der zu verbindenden Komponenten, um deren Verbindung zu bewerkstelligen. Dieser Befestigungsbereich ist vorzugsweise rostbeständig, damit selbst dann, wenn die Solarpaneele und deren Befestigungsanordnung der Witterung ausgesetzt sind, eine dauerhafte und zuverlässige Verankerung sichergestellt werden kann. Der Bohrbereich hingegen ist während des Bohrens wichtig, und sollte deshalb gehärtet vorgesehen werden. Eine rostfreie Ausführung auch des Bohrbereichs ist vorteilhaft, aber nicht unbedingt erforderlich, da nach dem Bohren dieser Bohrbereich keine tragende Funktion mehr wahrnehmen muss und deshalb außerhalb der beiden Komponenten angeordnet werden kann, wodurch die Befestigung alleine durch den Befestigungsbereich hergestellt ist.

Gemäß einem Ausführungsbeispiel kann die selbstbohrende und vorzugsweise auch gewindeschneidende Schraube einen Gewindeformbereich zwischen dem Befestigungsbereich und dem Bohrbereich aufweisen, der zum Schneiden eines Gewindes in mindestens einer der aneinander anzubringenden Komponenten eingerichtet sein kann. Ist zwischen dem Bohrbereich und dem Befestigungsbereich ein solcher Gewindeformbereich vorgesehen, so schneidet sich die Schraube in diesem Bereich ihr eigenes Gewinde beim schraubenden Durchdringen der zu verbindenden Komponenten. Eine Schraube, die auch diese Funktionalität erfüllt und somit erfindungsgemäß eingesetzt werden kann, ist zum Beispiel eine Schraube des Typs "Zebra *piasta"* der Firma Würth.

Gemäß einem Ausführungsbeispiel kann die selbstbohrende Schraube einstoffig gefertigt sein. Eine einstoffig gefertigte Schraube, das heißt eine aus einem einzigen durchgehenden Material gefertigte Schraube, ist kostengünstig herstellbar. Es hat sich gezeigt, dass auch eine Schraube, die zum Beispiel durchgängig aus demselben Stahlmaterial hergestellt ist, für die erfindungsgemäßen Zwecke ausreichend sein kann.

Gemäß einem Ausführungsbeispiel kann die selbstbohrende Schraube einen Kopfbereich zum Angreifen eines Schraubendrehers haben. Eine Sollbruchstelle (zum Beispiel ein mechanisch gezielt geschwächter Bereich) der Schraube kann zwischen dem Kopfbereich und einem restlichen Bereich der Schraube angeordnet und eingerichtet sein, bei Überschreitung einer vorgebbaren mechanischen Sollbelastung während des Montierens abzuscheren oder abzubrechen, womit der Kopfbereich von dem restlichen Bereich abtrennbar und die Schraube nicht mehr betätigbar ist. Durch Vorsehen einer solchen Sollbruchstelle kann ein effektiver Diebstahlschutz zum Vermeiden des unbefugten Entfernens eines montierten Solarpaneels geschaffen werden. Die Schraube wird während des Montageprozesses einem so hohen Drehmoment oder einer sonstigen derart hohen Belastung ausgesetzt, dass sich deren Kopf von dem Rest abtrennt. Fehlt der Kopf, so ist die Schraube nicht mehr mit einem einfachen Schraubendreher aus den beiden verbundenen Komponenten herausdrehbar. Da Solarpaneele teuer sind und einer hohen Gefahr ausgesetzt sind, unbefugt entwendet zu werden, gewährleistet diese Maßnahme zusätzlich zu dem geringen Montageaufwand auch einen zuverlässigen Schutz vor Diebstahl des Solarpaneels. Die Sollbruchstelle kann zum Beispiel als ein Material geringerer geometrischer Dicke ausgeführt sein, die bei Überschreiten des Solldrehmoments den wirkenden Kräften nicht mehr standhalten kann. Ergänzend oder alternativ kann das Material der Sollbruchstelle ein anderes Material sein als eines, das für den Rest der Schraube verwendet wird, insbesondere ein weicheres bzw. weniger robustes Material. Somit ist erfindungsgemäß ein sicheres und modulares Befestigungssystem geschaffen, das Bohren, Befestigen und ggf. Abscheren eines Schraubenkopfes mit einem einzigen Befestigungsmittel in einem einzigen Vorgang ermöglicht.

Gemäß einem Ausführungsbeispiel können das Bodenteil, der Haltebügel und die mindestens eine Profilschiene aus einem Material gefertigt sein, das eine geringere Härte (zum Beispiel Brinell-Härte) hat als die selbstbohrende Schraube. Diese Ausgestaltung kommt einerseits einer leichten Montierbarkeit dieser Komponenten aneinander zugute, da die selbstbohrende und vorzugsweise auch gewindeschneidende Schraube oder die selbstbohrenden und vorzugsweise auch gewindeschneidenden Schrauben mechanisch härter ist oder sind als das Material der zu befestigenden Komponenten und somit einfach die Komponenten ohne großen Kraftaufwand durchdringen kann. Gleichzeitig sind solche weniger harten Materialien für die zu befestigenden Komponenten in vielen Fällen auch geeignet, eine leichtgewichtige Befestigungsanordnung bereitzustellen, was hinsichtlich der auf ein Gebäude einwirkenden Belastung durch die montierten Solarpaneele vorteilhaft ist. Alternativ können das Bodenteil und der Haltebügel aus einem Material (zum Beispiel Stahl) mit einer größeren Härte gefertigt sein als ein Material der mindestens einen Profilschiene (zum Beispiel Aluminium).

Gemäß einem Ausführungsbeispiel können das Bodenteil, der Haltebügel und die mindestens eine Profilschiene daher aus Aluminium gefertigt sein. Aluminium ist ein vorteilhaft einsetzbares Leichtbaumaterial, das bei vertretbaren Kosten und guter Tragfähigkeit nur eine geringe mechanische Belastung auf ein Gebäude ausübt. Alternativ können die Komponenten aber auch aus Eisen, Stahl, Kunststoff oder dergleichen gefertigt sein.

Gemäß einem Ausführungsbeispiel kann die selbstbohrende und vorzugsweise auch gewindeschneidende Schraube aus Edelstahl gefertigt sein. Dieses Material hat eine ausreichende mechanische Härte, um bei einem Durchbohren der Komponenten den dort wirkenden Kräften standzuhalten. Allerdings können für die Schraube auch andere Materialien, wie zum Beispiel Eisen, Messing, Kupfer oder Aluminium verwendet werden.

Gemäß einem Ausführungsbeispiel kann die mindestens eine Profilschiene eine erste Profilschiene zum Anbringen an dem Haltebügel mittels mindestens eines ersten der ersten Befestigungsmittel aufweisen. Ferner kann sie eine zweite Profilschiene zum Anbringen an dem mindestens einen Solarpaneel mittels mindestens eines zweiten der ersten Befestigungsmittel aufweisen. Die erste Profilschiene und die zweite Profilschiene können aneinander mittels mindestens eines dritten Befestigungsmittels montierbar sein. Die erste Profilschiene kann auch als Haltebügelprofilschiene bezeichnet werden, da diese mit dem Haltebügel verbunden wird. Die zweite Profilschiene kann auch als Querprofilschiene oder als Kreuzprofilschiene bezeichnet werden, da diese üblicherweise quer oder winkelig, insbesondere rechtwinkelig, zu der Haltebügelprofilschiene montiert wird und somit mit dieser eine überkreuzende Struktur bildet. Durch Montage der Haltebügelprofilschiene und der Querprofilschiene aneinander kann eine gitterartige oder matrixartige Struktur gebildet werden, die mit hoher mechanischer Stabilität Solarpaneele tragen kann.

Gemäß einem Ausführungsbeispiel kann die Befestigungsanordnung einen Schienenverbinder aufweisen, der auf eine erste der zumindest einen Profilschiene und auf eine zweite der zumindest einen Profilschiene derart angepasst sein kann, dass mittels des Schienenverbinders die erste und die zweite Profilschiene miteinander verbindbar sind. Mit einem solchen Schienenverbinder können zwei gleichartige Profilschienen, zum Beispiel zwei Haltebügelprofilschienen oder zwei Querprofilschienen, miteinander auf definierten Abstand verbunden werden. Dadurch kann flexibel eine sichere Montage auch auf Dächern erfolgen, deren Dimension nicht einem ganzzahligen Vielfachen der Länge einer der Profilschienen entspricht. Insbesondere kann zum Verbinden von zwei Haltebügelprofilschienen einerseits und zum Verbinden von zwei Querprofilschienen andererseits ein und derselbe Schienenverbinder verwendet werden, der deshalb auch als Universalschienenverbinder bezeichnet werden kann.

Gemäß einem Ausführungsbeispiel kann der Schienenverbinder an der ersten Profilschiene und/oder an der zweiten Profilschiene mittels mindestens eines vierten Befestigungsmittels montierbar sein. Insbesondere kann auch diese Befestigung zwischen Schienenverbinder und zwei Profilschienen (zwei Querprofilschienen oder zwei Haltebügelprofilschienen) mittels selbstbohrender und vorzugsweise auch gewindeschneidender Schrauben vorgenommen werden. Indem auch diese Komponenten miteinander mittels einer selbstbohrenden und vorzugsweise auch gewindeschneidenden Schraube verbunden werden, ist es für einen Monteur ausreichend, nur eine sehr geringe Anzahl unterschiedlicher Bauelemente an einer Baustelle mit sich zu führen, mit denen universell viele oder sogar alle der zu verwendenden Komponenten verbunden werden können.

Gemäß einem Ausführungsbeispiel kann der Schienenverbinder an einer Außenseite eine Führungsnut aufweisen, in bzw. an welcher das vierte Befestigungsmittel positionierbar ist, um nachfolgend den Schienenverbinder an der ersten Profilschiene oder an der zweiten Profilschiene mittels des vierten Befestigungsmittels zu montieren. Indem an dem Schienenverbinder erkennbar eine Führungsnut gebildet ist, ist einem Benutzer eine Verbindungsstelle zum Anbringen eines Befestigungsmittels intuitiv angezeigt. Ferner dient die Führungsnut auch als Stütze und Zentriermittel für die einzudrehende Schraube, was den Montageprozess weiter vereinfacht.

Gemäß einem Ausführungsbeispiel kann das dritte Befestigungsmittels und/oder das vierte Befestigungsmittel eine selbstbohrende und vorzugsweise auch gewindeschneidende Schraube sein. Vorzugsweise sind sowohl das dritte als auch das vierte Befestigungsmittel jeweils eine selbstbohrende und vorzugsweise auch gewindeschneidende Schraube, weiter vorzugsweise desselben Typs wie bei dem ersten und zweiten Befestigungsmittel, womit der Montageaufwand und der Aufwand des Mitführens von bestimmten Bauelementen an einer Baustelle weiter reduziert wird.

Gemäß einem Ausführungsbeispiel kann der Schienenverbinder ein Außenprofil aufweisen, das korrespondierend zu einem Innenprofil zweier Profilschienen angepasst ist derart, dass der Schienenverbinder in die Profilschienen einschiebbar ist, um diese in einem vorgebbaren Abstand voneinander zu verbinden. Gemäß dieser Ausgestaltung ist der Schienenverbinder entlang einer vorgebbaren Achse in die jeweilige Profilschiene, insbesondere in eine Querprofilschiene, einführbar, und zwar bis zu einer vorgebbaren Tiefe.

Gemäß einem Ausführungsbeispiel kann der Schienenverbinder eine Außenflächentextur aufweisen, die korrespondierend zu einer Außenflächentextur zweier Profilschienen derart angepasst ist, dass der Schienenverbinder formschlüssig an die Profilschienen anlegbar ist, um diese miteinander (unmittelbar angrenzend oder auf Abstand) zu verbinden. Durch eine solche Außenflächentextur kann durch einen einzigen Monteur der Schienenverbinder flexibel an eine korrespondierende Außenflächentextur der Profilschienen, insbesondere der Haltebügelprofilschienen, angelegt werden und dann vorzugsweise selbstbohrende und vorzugsweise auch gewindeschneidende Schrauben zum Verbinden dieser beiden Komponenten durchgetrieben werden. Dies reduziert weiter den Montageaufwand.

Gemäß einem Ausführungsbeispiel kann die Befestigungsanordnung ein Kabelhalterungsmodul aufweisen, das einen Kabelhaltebereich zum Halten eines Kabels des Solarpaneels und einen Befestigungsbereich (insbesondere einen Steckbereich) zum Befestigen (insbesondere Anstecken) an einen korrespondierend zu dem Befestigungsbereich ausgestalteten Befestigungsbereich (insbesondere Steckbereich) der zumindest einen Profilschiene aufweist. Ein solches Kabelhalterungsmodul erfüllt die Aufgabe, unbefestigte Kabel eines Solarpaneels sicher zu verstauen und somit einerseits eine einwandfreie elektrische Funktion des Systems vorzusehen und andererseits eine Kabelführung in definierter Weise ausgestalten zu können. Ist in dem Kabelhalterungsmodul ein solches Kabel gehalten, so kann mittels der korrespondierenden Befestigungsbereiche das Kabelhalterungsmodul an einer entsprechenden Profilschiene, insbesondere an einer Haltebügelprofilschiene, befestigt werden.

Gemäß einem Ausführungsbeispiel kann das Kabelhalterungsmodul zwei mittels eines Stegs gekoppelte Hohlzylindersegmente aufweisen, die miteinander derart wirkverbunden sind, dass mittels Drückens des Kabels gegen den Steg die zwei Hohlzylindersegmente zum Bilden eines umfänglich geschlossenen Kabelaufnahmebereichs aufeinander zu schwenkbar sind. Die Hohlzylindersegmente, die im Querschnitt zum Beispiel eine kreissegmentförmige Gestalt haben können, dienen in ihrem verbundenen Zustand dem Umgreifen des Kabels und bilden vor dem Aufnehmen des Kabels eine Aufnahmeöffnung. Ein Benutzer kann nun mit einem Handgriff intuitiv das Kabel gegen den Steg drücken, womit es zu einer Klappbewegung der beiden Hohlzylindersegmente aufeinander zu kommt. Dadurch nimmt das Kabelhalterungsmodul das Kabel in seinem Inneren auf. Zuvor oder anschließend kann das nun mit dem Kabel versehene Kabelhalterungsmodul an der entsprechenden Profilschiene (oder an einer anderen Komponente) befestigt werden.

Gemäß einem Ausführungsbeispiel kann jedes der Hohlzylindersegmente einen (zum Beispiel ebenfalls stegartigen) Fortsatz aufweisen, wobei die Fortsätze eingerichtet sein können, bei Schwenken der zwei Hohlzylindersegmente das in dem Kabelaufnahmebereich aufgenommene Kabel gemeinsam zu zentrieren. Derartige stegartige Fortsätze vereinfachen somit weiter die Handhabung des Kabelhalterungsmoduls durch eine selbsttätige Zentrierung des Kabels innerhalb des Kabelhalterungsmoduls, da diese beidseitig gegen das in dem Kabelhalterungsmodul aufgenommene Kabel drücken, um dieses vor einem unerwünschten Bewegen innerhalb des Kabelhalterungsmoduls zu bewahren. Dies erlaubt eine weiter verbesserte Kabelführung.

Gemäß einem Ausführungsbeispiel kann ein weiteres Hohlzylindersegment mit den beiden Hohlzylindersegmenten verbunden sein. Der Befestigungsbereich kann an dem weiteren Hohlzylindersegment vorgesehen sein. Das dritte Hohlzylindersegment dient als Stütz- und Verbindungselement für die anderen beiden Hohlzylindersegmente. Es kann einen größeren Durchmesser haben als die anderen beiden Hohlzylindersegmente. Um eine symmetrische Kraftübertragung zu erreichen, kann das Befestigungselement an zentraler Stelle an dem weiteren Hohlzylindersegment angeordnet sein.

Gemäß einem Ausführungsbeispiel kann eine erste der mindestens einen Profilschiene einen Aufnahmeabschnitt aufweisen, der zum Halten einer zweiten der mindestens einen Profilschiene eingerichtet ist. Sie kann ferner einen Montageabschnitt aufweisen, der zum Montieren an dem Haltebügel eingerichtet ist. Ein Auflageabschnitt dieser Profilschiene kann zum Auflegen auf den Haltebügel vor Montieren des Haltebügels an dem Montageabschnitt eingerichtet sein. Gemäß diesem Ausführungsbeispiel der vorliegenden Erfindung ist eine Montage eines Gegenstands an einer Unterlage ermöglicht, die auch ein einziger Monteur bequem vornehmem kann. Dies kann mittels einer einfach aufgebauten und leichtgewichtig ausbildbaren Profilschiene erreicht werden, die von einem damit verbindbaren Haltebügel separat vorgesehen ist. Bei herkömmlichen Befestigungsanordnungen sind in der Regel zwei Monteure erforderlich, von denen einer eine Profilschiene vor dem Montieren an einem Haltebügel hält, und der andere die Befestigung vornimmt. Im Gegensatz dazu kann erfindungsgemäß die Profilschiene zunächst auf den Haltebügel definiert aufgesetzt und vorläufig abgestützt werden, so dass die Gewichtskraft der Profilschiene in diesem Zwischenzustand von dem Haltebügel aufgenommen werden kann. Nach einer solchen provisorischen Anordnung der Profilschiene an dem Haltebügel kann dann - gegebenenfalls nach einer kurzen Hebebewegung- eine dauerhafte Befestigung von Profilschiene (auch als Haltebügelprofilschiene bezeichnet) und Haltebügel erfolgen.

Gemäß einem Ausführungsbeispiel kann der Montageabschnitt einen Montageschenkel aufweisen, der parallel zu einem Eingriffsschenkel des Auflageabschnitts verlaufend angeordnet ist. Zusätzlich zu einem Aufliegen der Profilschiene auf dem Haltebügel zur Einschränkung einer vertikalen Bewegung kann der Eingriffsschenkel somit eine seitliche Bewegungseinschränkung der Profilschiene bewirken, da der Haltebügel dann in seitlicher Richtung zwischen Montageschenkel und Eingriffsschenkel aufnehmbar ist und seitlich verrutschgeschützt die Profilschiene vertikal stützen kann. Dies fördert zusätzlich die Montierbarkeit der Profilschiene durch einen einzigen Monteur. Insbesondere kann durch den Eingriffsschenkel und eine dazu beispielsweise orthogonal angeordnete Auflagefläche des Auflageabschnitts eine zwischenzeitliche Auflage der Profischiene auf dem Haltebügel gewährleistet werden. Insbesondere kann ein "U-Profil" durch Montageschenkel, Auflagefläche und Eingriffsschenkel gebildet werden. Alternativ kann ein "L-Profil" durch Montageschenkel und einen horizontalen Abschnitt gebildet werden.

Gemäß einem Ausführungsbeispiel kann ein Montageschenkel des Haltebügels zwischen dem Montageschenkel und dem Eingriffsschenkel der Profilschiene einführbar sein. Die beiden Montageschenkel können aufeinander angepasste Platten (insbesondere unterschiedlicher Breite) sein, an denen sich Haltebügel und Profilschiene nach Befestigung dauerhaft berühren.

Gemäß einem Ausführungsbeispiel können die Montageschenkel an einander nach Montage zugewandten Flächen aufeinander angepasste Oberflächentexturen bzw. Strukturmerkmale aufweisen derart, dass die Strukturmerkmale in einer Mehrzahl von unterschiedlichen Höhenzuständen aneinander formschlüssig oder reibschlüssig anlegbar ausgebildet sind. Somit können die Formen der Montageschenkel aufeinander angepasst sein. Zum Beispiel können die beiden Montageschenkel korrespondierende Strukturmerkmale aufweisen, die aufeinander so angepasst sind, dass durch Anlegen der beiden Montageschenkel aneinander deren Strukturmerkmale in Eingriff gebracht werden und dann nur ein geringer oder gar kein Anpressdruck erforderlich ist, um eine provisorische Befestigung der Montageabschnitte aneinander zur Erleichterung der nachfolgenden dauerhaften Befestigung durch einen Monteur zu ermöglichen. Insbesondere können die Montageschenkel an einander zugewandten Flächen korrespondierende Strukturmerkmale aufweisen derart, dass die Strukturmerkmale in einer Mehrzahl von unterschiedlichen Höhenzuständen aneinander formschlüssig anlegbar ausgebildet sind. Somit können die Strukturmerkmale neben ihrer Aufgabe als Haltemittel auch Stufen bilden, von denen jede einer einstellbaren Höhe entspricht. Dadurch kann der Gegenstand in einer über einen gewissen Bereich veränderbaren Höhe über der Unterlage montiert werden, und es können Höhenunterschiede ausgeglichen werden.

Gemäß einem Ausführungsbeispiel können die Strukturmerkmale ein Sägezahnprofil, ein Wellenprofil und/oder ein Rechteckprofil aufweisen. Bei dem Einsatz solcher mit geringem Aufwand ausbildbarer Strukturmerkmale kann bereits ein kleiner Anpressdruck ausreichend sein, um eine provisorische Befestigung zu erreichen. Ferner ist eine ausreichend feine Höheneinstellbarkeit mit derartigen Strukturmerkmalen auf einfache und intuitive Weise ermöglicht.

Gemäß einem Ausführungsbeispiel kann der Auflageabschnitt als Eingriffsabschnitt ausgestaltet sein, der zum Ineingriffnehmen des Haltebügels vor Montieren des Haltebügels an dem Montageabschnitt eingerichtet ist.

Gemäß einem Ausführungsbeispiel kann der Haltebügel einen Befestigungsabschnitt und einen Montageabschnitt aufweisen. Der Befestigungsabschnitt kann zum Befestigen an dem an dem Dach befestigbaren Bodenteil eingerichtet sein. Der Montageabschnitt kann zum Montieren an dem Montageabschnitt der ersten Profilschiene eingerichtet sein.

Gemäß einem Ausführungsbeispiel kann der Haltebügel zwischen dem Befestigungsabschnitt und dem Montageabschnitt einen Abstandsabschnitt aufweisen. Unter einem Abstandsabschnitt kann eine Strebe oder dergleichen verstanden werden, die einen vorgebbaren Abstand zwischen dem Dach und dem Solarpaneel aufrechterhält. Befestigungsabschnitt, Montageabschnitt und Abstandsabschnitt können einstückig ausgebildet sein, zum Beispiel als abgewinkeltes Blechteil.

Gemäß einem Ausführungsbeispiel können sich der Befestigungsabschnitt und der Montageabschnitt entlang (oder im Wesentlichen entlang) einer ersten Richtung erstrecken, die zu einer zweiten Richtung abgewinkelt, insbesondere im Wesentlichen rechtwinklig abgewinkelt, angeordnet ist, entlang welcher zweiten Richtung der Abstandsabschnitt verläuft. Somit können Befestigungsabschnitt und Montageabschnitt zueinander parallel verlaufen und senkrecht zu dem Abstandsabschnitt verlaufen.

Gemäß einem exemplarischen Ausführungsbeispiel der Erfindung können der Befestigungsabschnitt, der Montageabschnitt und der Abstandsabschnitt jeweils aneinandergrenzende Plattenabschnitte aufweisen, die seitlich abgewinkelte Versteifungskanten aufweisen. Zum Beispiel können die Plattenabschnitte von Befestigungsabschnitt, Montageabschnitt und Abstandsabschnitt aus einem gebogenen Blech gefertigt sein, das im Wesentlichen Z-förmiger oder stufenförmiger Gestalt sein kann. Um die Robustheit einer solchen Struktur zu erhöhen, können seitliche Bereiche des Blechs zu Versteifungskanten umgebogen sein.

Gemäß einem exemplarischen Ausführungsbeispiel der Erfindung kann der Haltebügel ein Dachhaken sein, der an einem Dach als Unterlage befestigbar ist. Unter einem Dachhaken kann eine hakenförmige Struktur verstanden werden, die in einem Bereich direkt an einem Dach (oder an einem an einem Dach angebrachten Boden- oder Fußteil) und in einem anderen Bereich an der mindestens einen Profilschiene befestigt werden kann, um einen von der Profilschiene getragenen Gegenstand an dem Dach zu montieren.

Im Folgenden werden exemplarische Ausführungsbeispiele der vorliegenden Erfindung mit Verweis auf die folgenden Figuren detailliert beschrieben.
Fig. 1 bis Fig. 7 zeigen unterschiedliche Montagezustände während des Durchführens eines Verfahrens zum Montieren eines Solarpaneels an einem Dach mittels einer Befestigungsanordnung gemäß einem exemplarischen Ausführungsbeispiel der Erfindung.
Fig. 8 bis Fig. 10 zeigen eine zu der gemäß Fig. 7 montierten Befestigungsanordnung ähnliche Befestigungsanordnung gemäß einem exemplarischen Ausführungsbeispiel der Erfindung.
Fig. 11 zeigt eine räumliche Ansicht und Fig. 12 zeigt eine Seitenansicht einer Haltebügelprofilschiene gemäß einem exemplarischen Ausführungsbeispiel der Erfindung.
Fig. 13 bis Fig. 17 zeigt unterschiedliche Ausführungsformen von als Dachhaken ausgestalteten Haltebügeln von Befestigungsanordnungen gemäß exemplarischen Ausführungsbeispielen der Erfindung.
Fig. 18 zeigt eine räumliche Ansicht eines Kabelhalterungsmoduls einer Befestigungsanordnung gemäß einem exemplarischen Ausführungsbeispiel der Erfindung.
Fig. 19 zeigt eine Seitenansicht des Kabelhalterungsmoduls aus Fig. 18 in einem Betriebszustand, in dem ein Kabel gerade in das Kabelhalterungsmodul eingeführt wird.
Fig. 20 zeigt eine räumliche Ansicht und Fig. 21 zeigt eine Seitenansicht einer Querprofilschiene einer Befestigungsanordnung gemäß einem exemplarischen Ausführungsbeispiel der Erfindung.
Fig. 22 zeigt eine räumliche Ansicht und Fig. 23 zeigt eine Seitenansicht eines Schienenverbinders einer Befestigungsanordnung gemäß einem exemplarischen Ausführungsbeispiel der Erfindung.
Fig. 24 zeigt eine Ansicht, bei der ein Bodenteil, eine Haltebügelprofilschiene und eine Querprofilschiene auf einer Dachsparre montiert sind.
Fig. 25 zeigt eine Anordnung, bei der zusätzlich zu Fig. 24 ein Solarpaneel mittels eines Überbrückungselements an der Anordnung gemäß Fig. 24 montiert ist.
Fig. 26 zeigt, wie eine Haltebügelprofilschiene und ein Haltebügel ausschließlich mittels einer selbstbohrenden Schraube aneinander befestigt sind.
Fig. 27 zeigt die Befestigung eines Bodenteils an einem Holzsparren eines Dachs einerseits und die Befestigung eines Haltebügels an dem Bodenteil andererseits.
Fig. 28 und Fig. 29 zeigen selbstbohrende Schrauben von Befestigungsanordnungen gemäß exemplarischen Ausführungsbeispielen der Erfindung.
Fig. 30 zeigt eine Befestigungsanordnung gemäß einem exemplarischen Ausführungsbeispiel der Erfindung.

Gleiche oder ähnliche Komponenten in unterschiedlichen Figuren sind mit gleichen Bezugsziffern versehen.

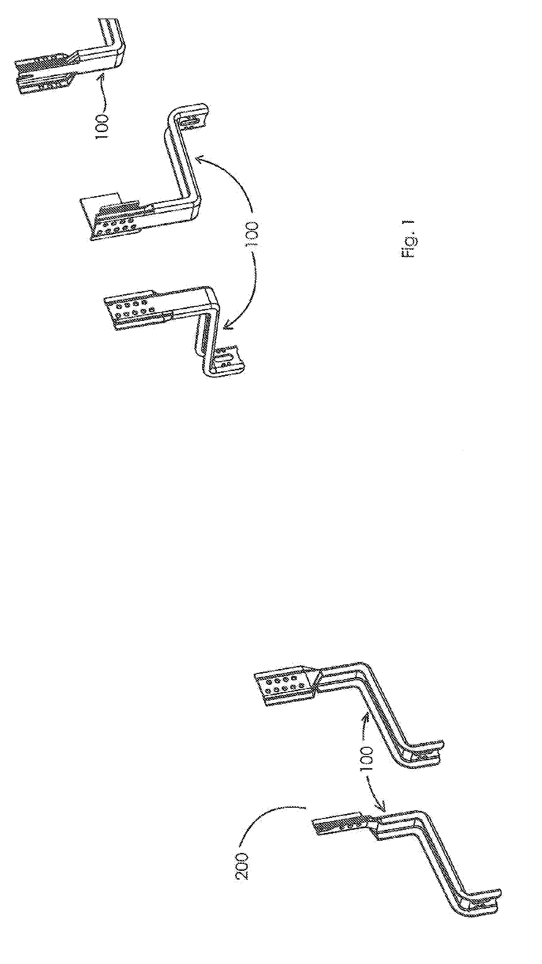

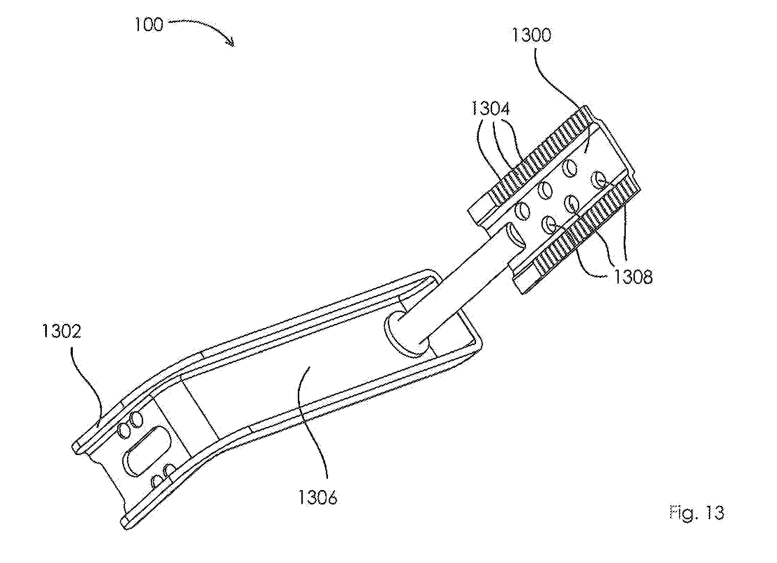

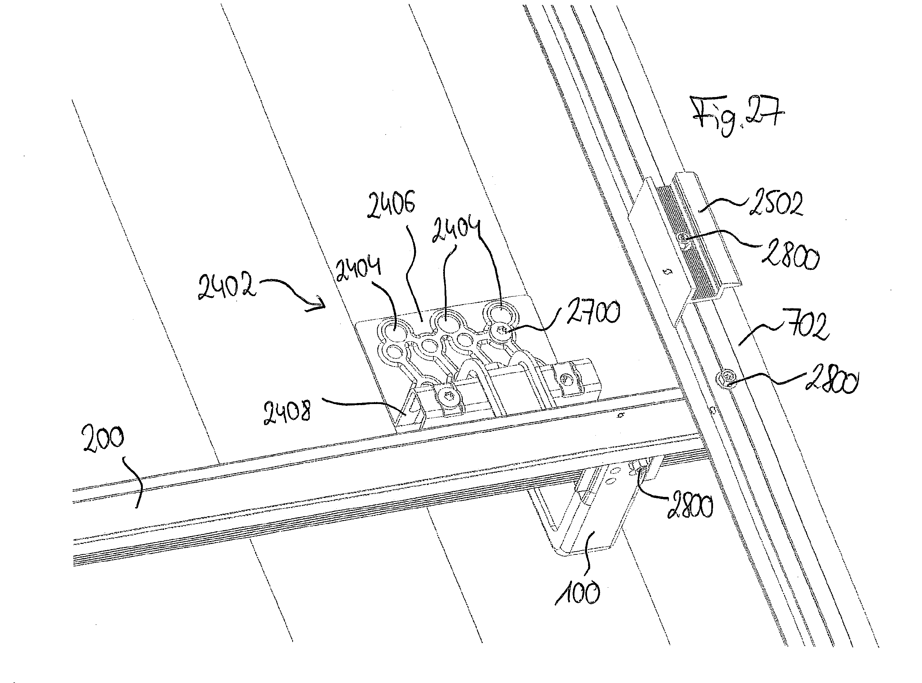

**Fig. 1** zeigt eine Anordnung von insgesamt fünf Haltebügeln 100 unterschiedlicher Ausgestaltungen (siehe auch Fig. 13 bis Fig. 17), die zum Anbringen an einem in Fig. 1 nicht gezeigten Bodenteil (siehe auch Fig. 27) ausgestaltet sind. Die Haltebügel 100 können entweder an einem jeweiligen Bodenteil vormontiert sein, mit einem jeweiligen Bodenteil einstückig gebildet sein oder separat von dem Bodenteil vorgesehen sein. In letzterem Fall sind Befestigungsmittel zum Befestigen des Haltebügels 100 an dem Bodenteil einsetzbar.

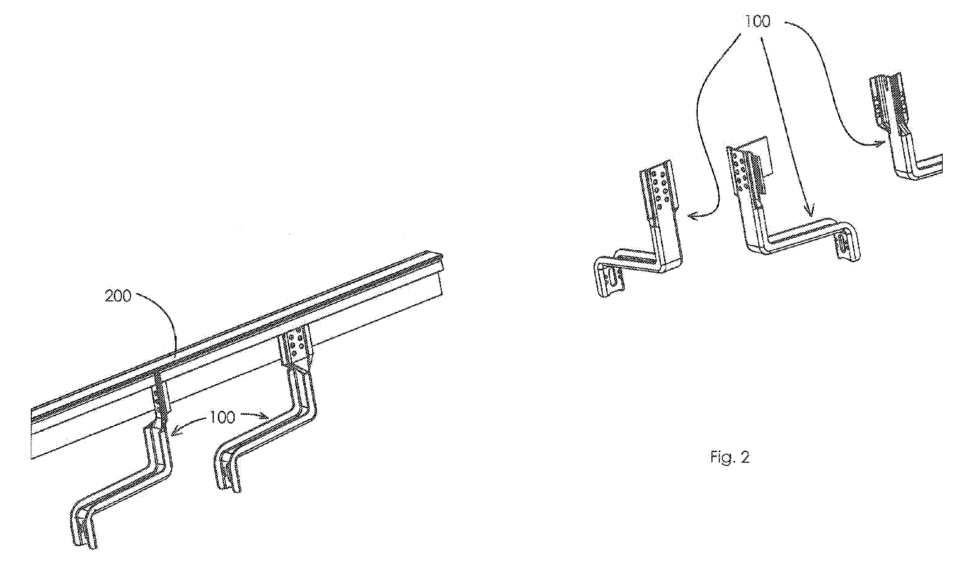

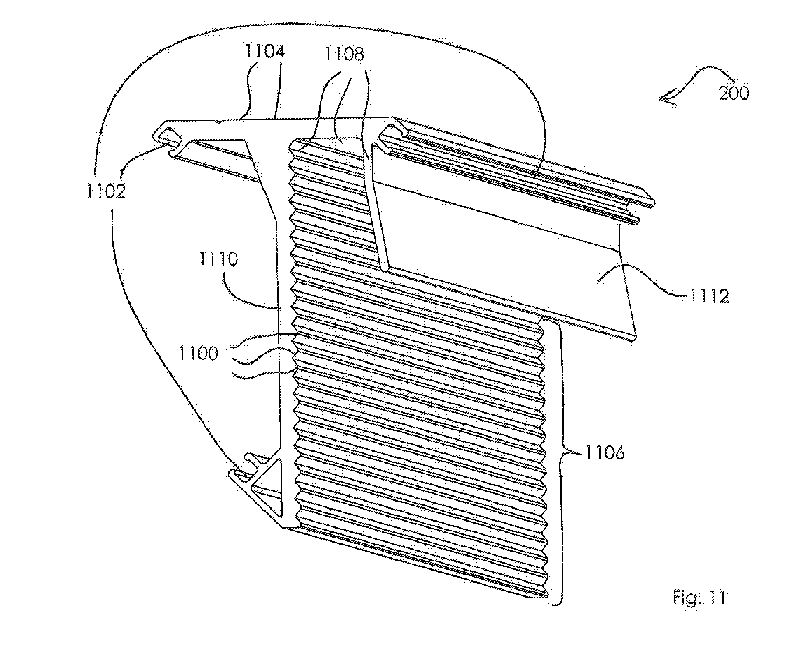

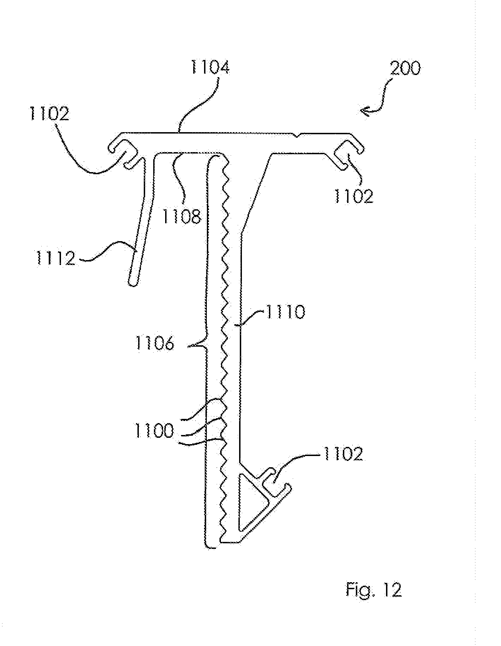

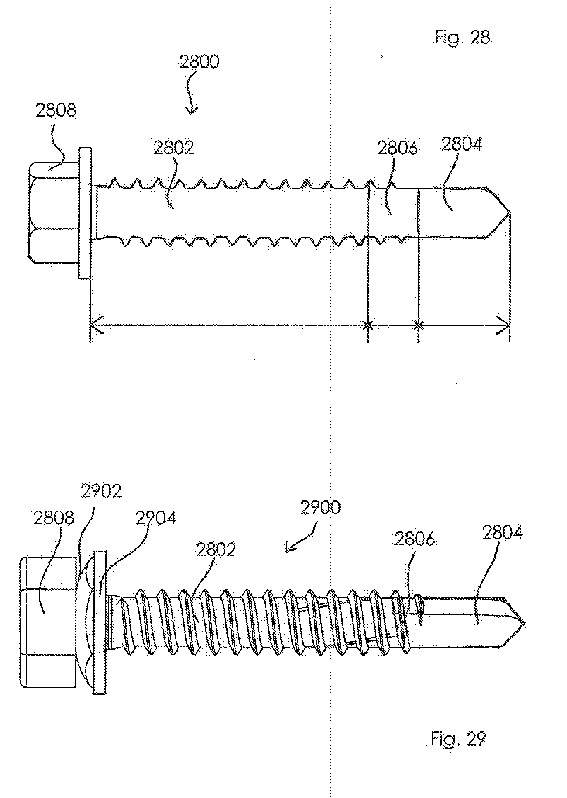

**Fig. 2** zeigt eine Anordnung, bei der eine erste Haltebügelprofilschiene 200 (siehe auch Fig. 11 und Fig. 12) an zwei der Haltebügel 100 angelegt ist. Mittels in Fig. 2 nicht gezeigter selbstbohrender und gewindeschneidender Schrauben (siehe auch Fig. 28 und Fig. 29) können die Haltebügel 100 und die erste Haltebügelprofilschiene 200 aneinander befestigt werden, indem die jeweilige Schraube durch Löcher in dem Haltebügel 100 hindurchgeführt und vorbohrungsfrei durch das Vollmaterial der ersten Haltebügelprofilschiene 200 durchgebohrt wird.

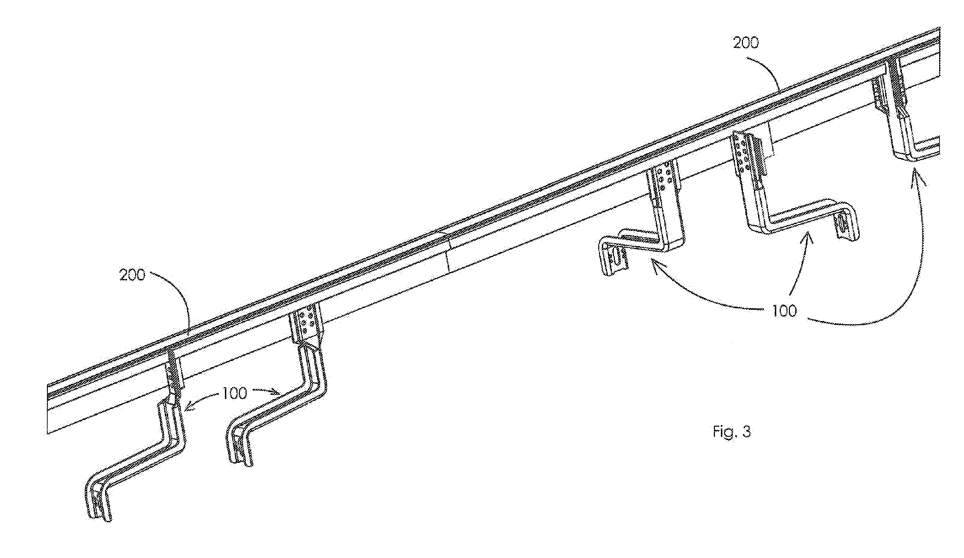

**Fig. 3** zeigt eine Anordnung, bei der an die erste Haltebügelprofilschiene 200 eine zweite Haltebügelprofilschiene 200 identischer Ausgestaltung lückenfrei angelegt bzw. angestückt ist und an drei andere der Haltebügel 100 angelegt ist. Es können auch die drei anderen Haltebügel 100 an der zweiten Haltebügelprofilschiene 200 mittels jeweiliger in Fig. 3 nicht gezeigter selbstbohrender und gewindeschneidender Schrauben befestigt werden.

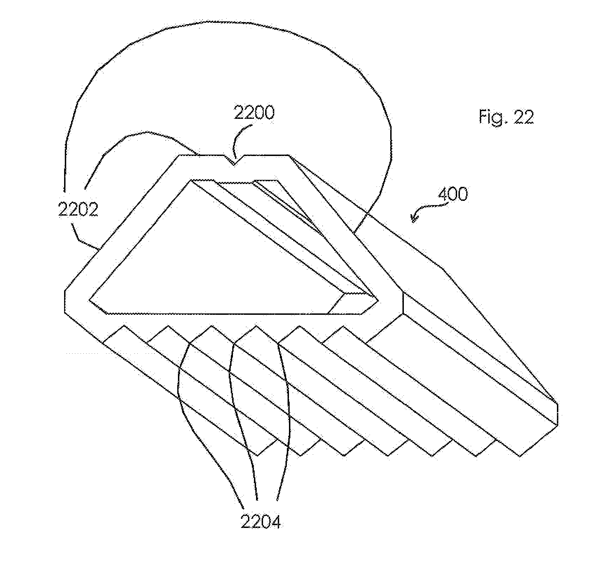

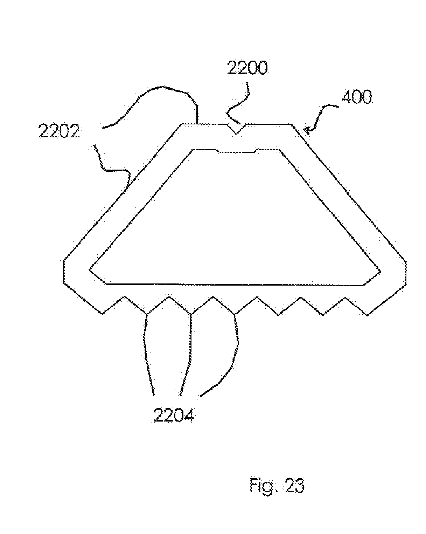

**Fig. 4** zeigt eine Anordnung, bei der ein Schienenverbinder 400 (siehe auch Fig. 22 und Fig. 23) an die beiden Haltebügelprofilschienen 200 diese überbrückend angelegt ist. Die Oberflächentexturen des Schienenverbinders 400 und der korrespondierenden Anlegeflächen der Haltebügelprofilschienen 200 sind aufeinander angepasst. Eine in Fig. 4 nicht gezeigte selbstbohrende und gewindeschneidende Schraube kann vorbohrungsfrei durch den Schienenverbinder 400 und eine jeweilige der Haltebügelprofilschienen 200 durchgeschraubt werden, um die Haltebügelprofilschienen 200 mittels des Schienenverbinders 400 aneinander zu befestigen.

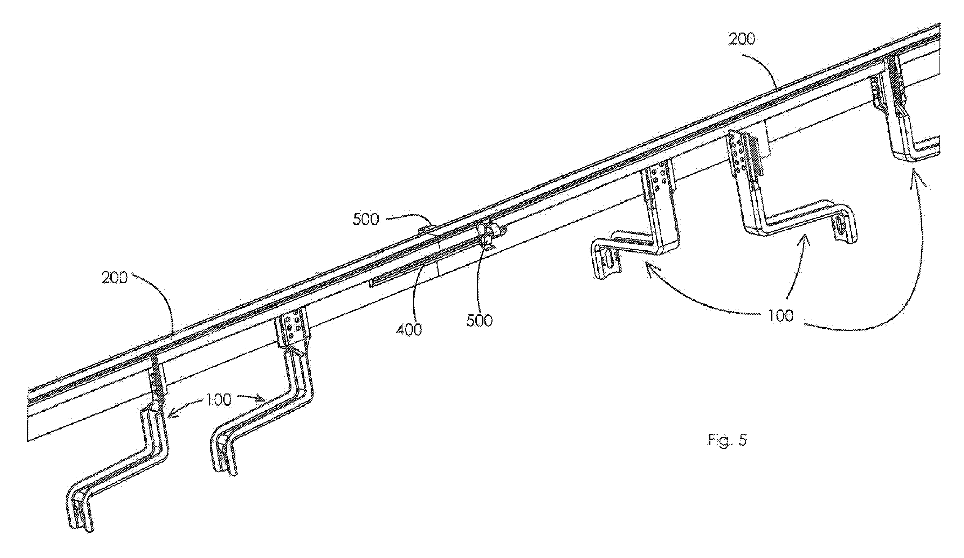

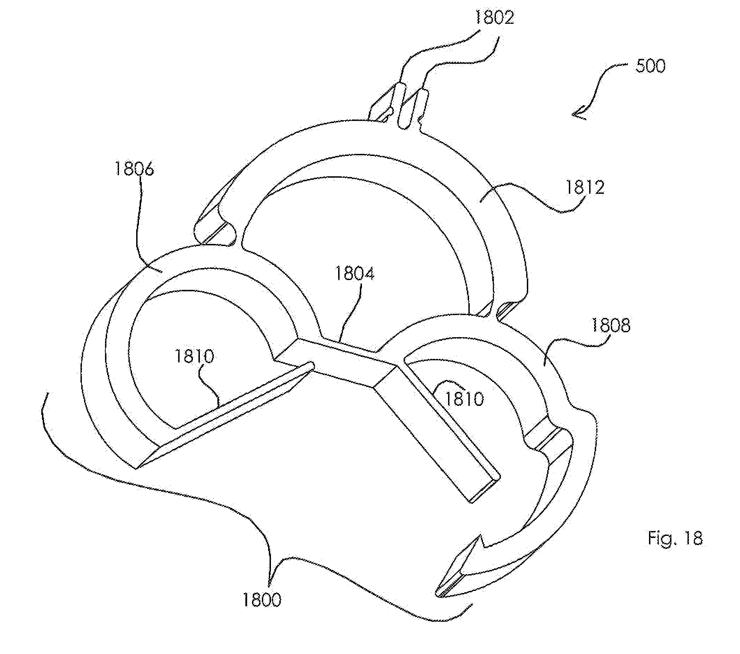

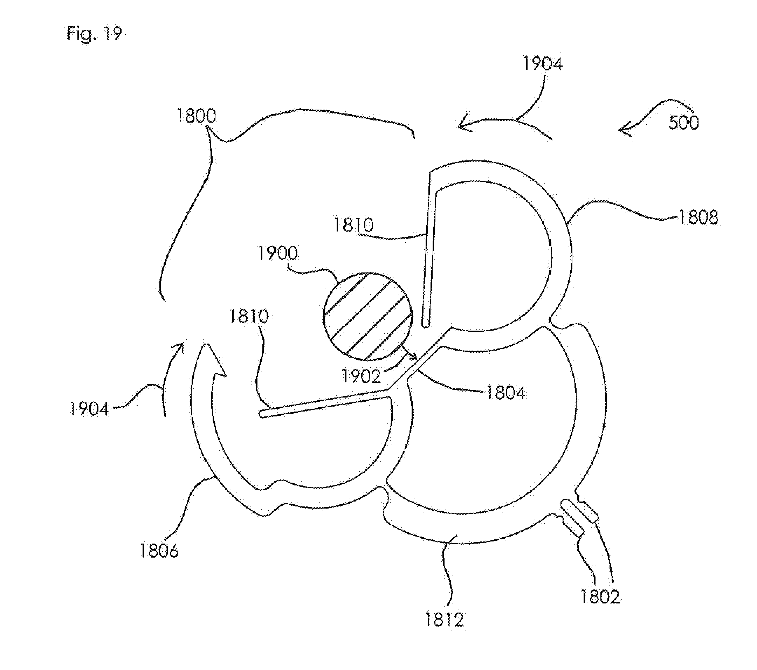

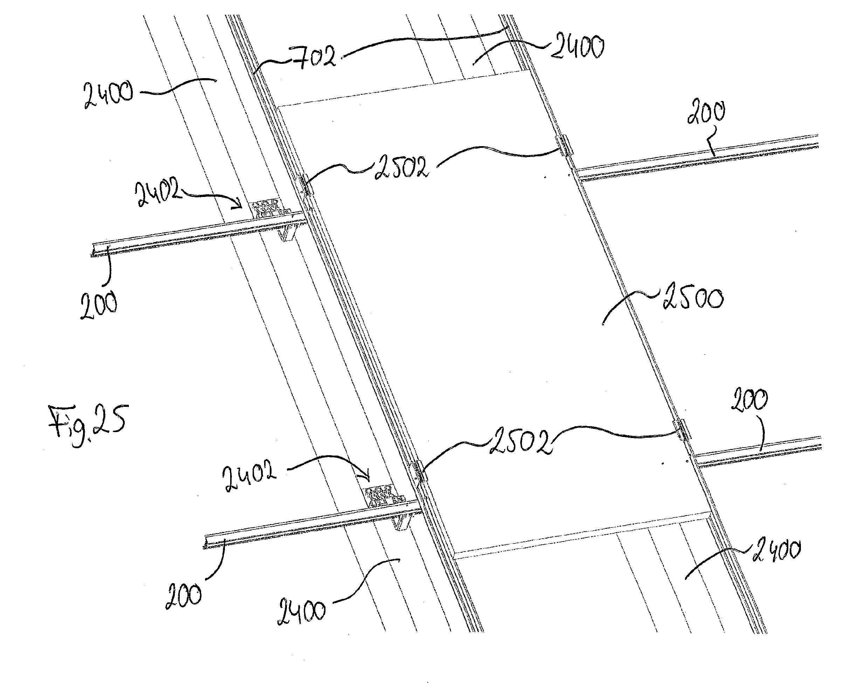

**Fig. 5** zeigt, dass zwei Kabelhalterungsmodule 500 (siehe auch Fig. 18 und Fig. 19) an Steckbereiche der Haltebügelprofilschiene 200 angesteckt worden sind. Die Kabelhalterungsmodule 500 dienen zum Halten von in Fig. 5 nicht gezeigten Kabeln des zu montierenden Solarpaneels (siehe auch Fig. 25).

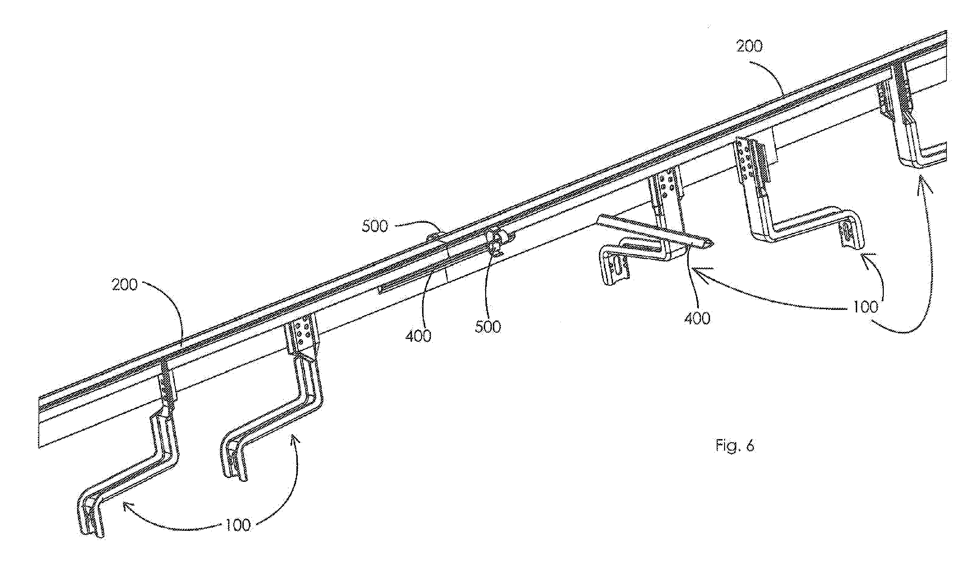

**Fig. 6** zeigt, dass zusätzlich ein weiterer Schienenverbinder 400, der zu dem zum Befestigen der Haltebügelprofilschienen 200 verwendeten Schienenverbinder 400 identisch ist, vorbereitet wird.

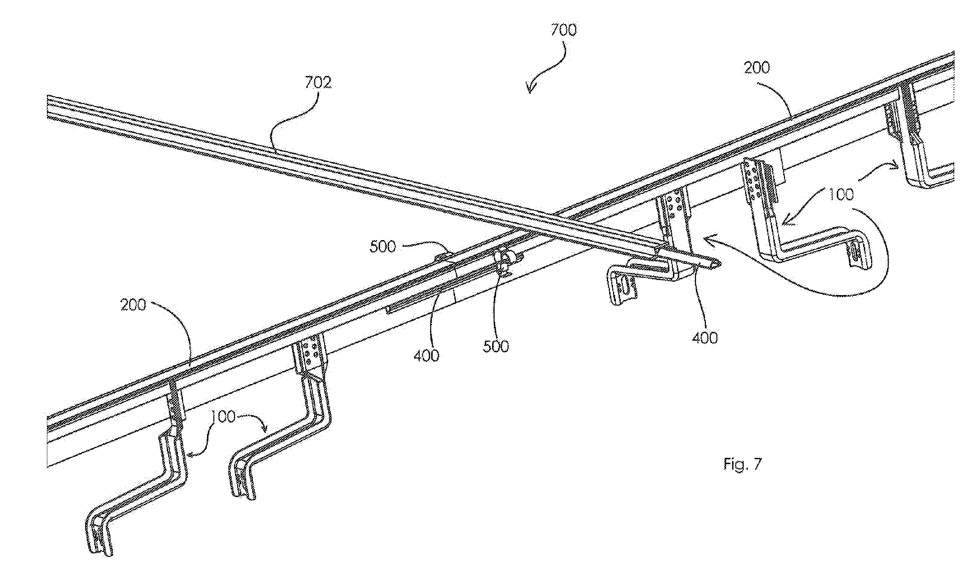

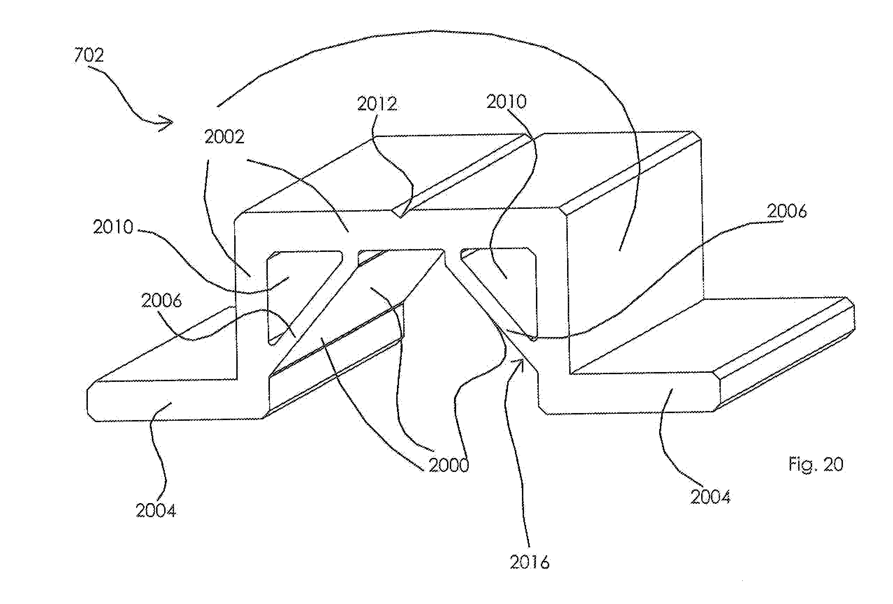

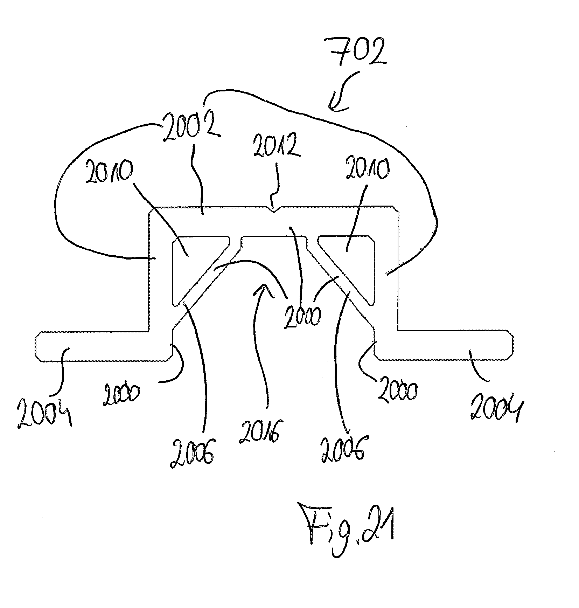

**Fig. 7** zeigt, dass eine Querprofilschiene 702 (siehe auch Fig. 20 und Fig. 21) auf die Haltebügelprofilschienen 200 aufgelegt worden ist und mittels einer in Fig. 7 nicht gezeigten selbstbohrenden und gewindeschneidenden Schraube an der Haltebügelprofilschiene 200 fest montiert ist. Ferner ist der in Fig. 6 gezeigte zweite Schienenverbinder 400 ein Stück weit in das Innere der Querprofilschiene 702 eingeschoben, um die Querprofilschiene 702 mit einer weiteren in Fig. 7 nicht gezeigten anderen Querprofilschiene 702 in einem vorgebbaren Abstand voneinander zu montieren. Dieser Abstand kann vorgegeben werden, indem der Schienenverbinder 400 ein vorgebbares Stück weit in die Querprofilschienen 702 eingeführt wird.

Somit ist oberhalb des Haltebügels 100 bis hin zu dem Solarpaneel, das auf der Querprofilschiene 702 montiert wird, jegliche Befestigungswirkung ausschließlich durch das Vorsehen von selbstbohrenden und selbstschneidenden Schrauben bewerkstelligt, wobei an allen Befestigungen dieselbe Schraube verwendet wurde, eventuell mit variablen Längen. Der Montageaufwand zum Montieren der Befestigungsanordnung 700 gemäß Fig. 7 ist somit sehr gering und kann von einem einzigen Monteur durch Mitführen sehr weniger Werkzeuge und Bauteile bewerkstelligt werden.

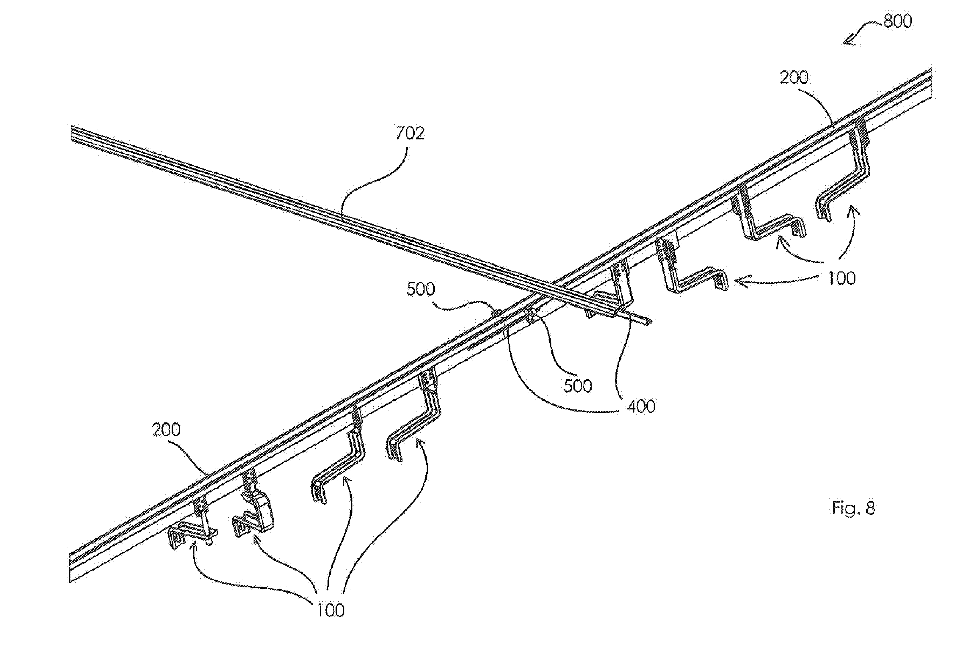

**Fig. 8** zeigt eine Befestigungsanordnung 800, bei der zusätzlich zu den Komponenten gemäß Fig. 7 noch weitere hinzugefügt sind. Fig. 8 zeigt daher, dass es sich bei der erfindungsgemäßen Befestigungsanordnung 800 um ein modulares System handelt, das durch einen Benutzer flexibel auf die Bedürfnisse des Einzelfalls hin zugeschnitten werden kann.

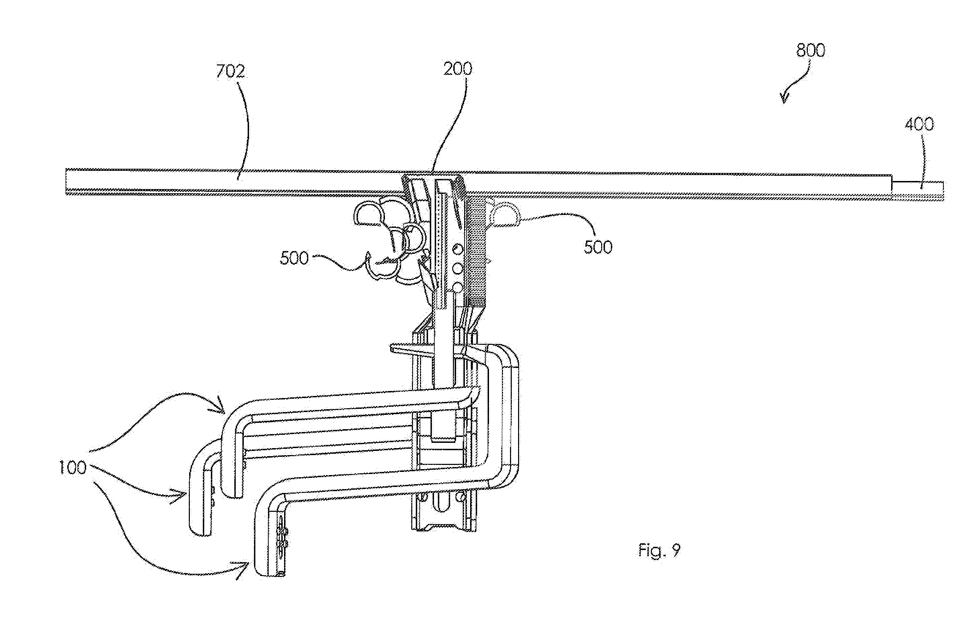

**Fig. 9** zeigt eine räumliche Ansicht der Befestigungsanordnung 800 gemäß Fig. 8, bei der die Relativanordnung der Haltebügelprofilschiene 200 bezüglich der Kabelhalterungsmodule 500 besser ersichtlich ist.

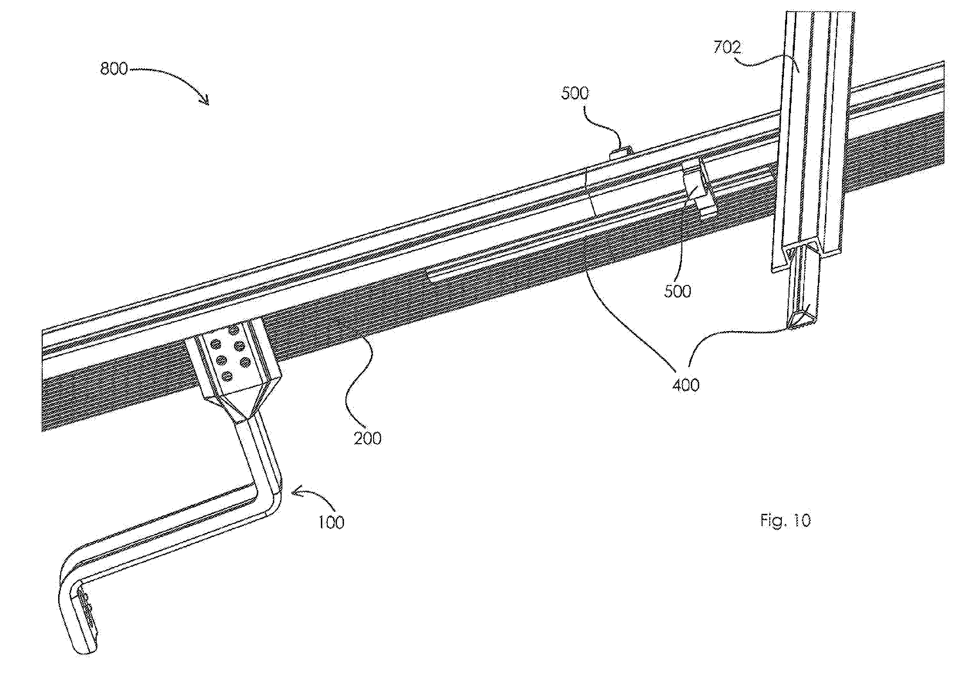

**Fig. 10** zeigt noch eine andere räumliche Ansicht der Befestigungsanordnung 800, bei der die Querprofilschiene 702 und der teilweise darin eingeschobene Schienenverbinder 400 näher zeigt sind.

Im Weiteren wird bezugnehmend auf **Fig. 11** und **Fig. 12** der Aufbau der Haltebügelprofilschiene 200 beschrieben.

Zunächst zeigt Fig. 11, dass bei der Haltebügelprofilschiene 200 eine Außenflächentextur 1100 auf eine korrespondierende Außenflächentextur des Schienenverbinders 400 (vgl. Bezugszeichen 2204 in Fig. 22 und Fig. 23) so angepasst ist, dass der Schienenverbinder 400 formschlüssig an die Haltebügelprofilschiene 200 anlegbar ist, um den Schienenverbinder 400 und die Haltebügelprofilschiene 200 nachfolgend mittels einer selbstbohrenden und gewindeschneidenden Schraube miteinander zu verbinden.

Fig. 11 zeigt ferner, dass bei der Haltebügelprofilschiene 200 eine Steckaufnahme 1102 vorgesehen ist, die mit einem Federstecker des Kabelhalterungsmoduls 500 (vgl. Bezugszeichen 1802 in Fig. 18 und Fig. 19) versteckbar ist, um eine Steckverbindung auszubilden.

Ferner hat die Haltebügelprofilschiene 200 einen als flächigen Plattenbereich ausgebildeten Aufnahmeabschnitt 1104, der zum Halten der Querprofilschiene 702 ausgestaltet ist. Zu diesem Zweck wird die Querprofilschiene 702 von oben auf den Aufnahmeabschnitt 1104 aufgelegt. Nachfolgend wird eine selbstbohrende und gewindeschneidende Schraube durch die Querprofilschiene 702 und durch den Aufnahmeabschnitt 1104 gebohrt, womit die Verbindung hergestellt ist.

Darüber hinaus enthält die Haltebügelprofilschiene 200 einen Montageabschnitt 1106, der zum Montieren an dem Haltebügel 100 eingerichtet ist.

Ein U-förmiger Auflageabschnitt 1108 dient dem Auflegen auf den Haltebügel 100 vor dem Montieren des Haltebügels 100 an dem Montageabschnitt 1106. Der Montageabschnitt 1106 weist einen Montageschenkel 1110 auf, der parallel zu einem Eingriffsschenkel 1112 des Auflageabschnitts 1108 verlaufend angeordnet ist. Ein Montageschenkel des Haltebügels 100 (vgl. Bezugszeichen 1300 in Fig. 13) ist zwischen dem Montageschenkel 1110 und dem Eingriffsschenkel 1112 der Haltebügelprofilschiene 200 einführbar. Die Profilschiene 200 wird somit anschaulich seitlich von den Komponenten 1110 und 1112 gehalten und nach oben von dem Auflageabschnitt 1108 abgestützt, auf dem Montageschenkel des Haltebügels 100.

Der Montageschenkel 1110 hat an einer Fläche, die im montierten Zustand dem Montageschenkel des Haltebügels 100 zugewandt ist, die Außenflächentextur 1100 oder Strukturmerkmale in Form eines Dreiecksprofils, die mit Strukturmerkmalen des Haltebügels 100 korrespondieren (vgl. Bezugszeichen 1304 in Fig. 13). Somit sind die beiden Montageschenkel von Haltebügelprofilschiene 200 und Haltebügel 100 aneinander formschlüssig bzw. reibschlüssig anlegbar.

Fig. 13 bis Fig. 17 zeigen unterschiedliche Ausgestaltungen eines als Dachhaken ausgebildeten Haltebügels 100.

Der Haltebügel 100 gemäß **Fig. 13** hat einen Befestigungsabschnitt 1302 und einen Montageabschnitt 1300. Der Befestigungsabschnitt 1302 dient zum Befestigen (zum Beispiel Vormontieren) an dem an dem Dach befestigbaren Bodenteil. Der Montageabschnitt 1300 dient zum Montieren an dem Montageabschnitt 1106 der Haltebügelprofilschiene 200. Der Haltebügel 100 hat zwischen dem Befestigungsabschnitt 1302 und dem Montageabschnitt 1300 einen Abstandshalter 1306. Der Befestigungsabschnitt 1302 und Montageabschnitt 1300 erstrecken sich entlang einer ersten Richtung, die zu einer zweiten Richtung im Wesentlichen rechtwinkelig abgewinkelt ist, in welcher zweiten Richtung der Abstandshalter 1306 verläuft.

Wie ferner in Fig. 13 zu erkennen ist, enthält der Montageabschnitt 1300 Strukturmerkmale 1304 in Form von Dreieckprofilen, die auf die Textur oder Strukturmerkmale 1100 der Haltebügelprofilschiene 200 angepasst sind. Somit kann der Montageabschnitt 1300 an dem Montageabschnitt 1106 angelegt werden, und anschließend kann eine selbstbohrende und vorzugsweise auch gewindeschneidende Schraube durch Durchgangsöffnungen 1308 des Haltebügels 100 durchgeführt und vorbohrungsfrei durch den Montageschenkel 1110 der Haltebügelprofilschiene 200 durchgebohrt werden, um die Haltebügelprofilschiene 200 an dem Haltebügel 100 zu befestigen.

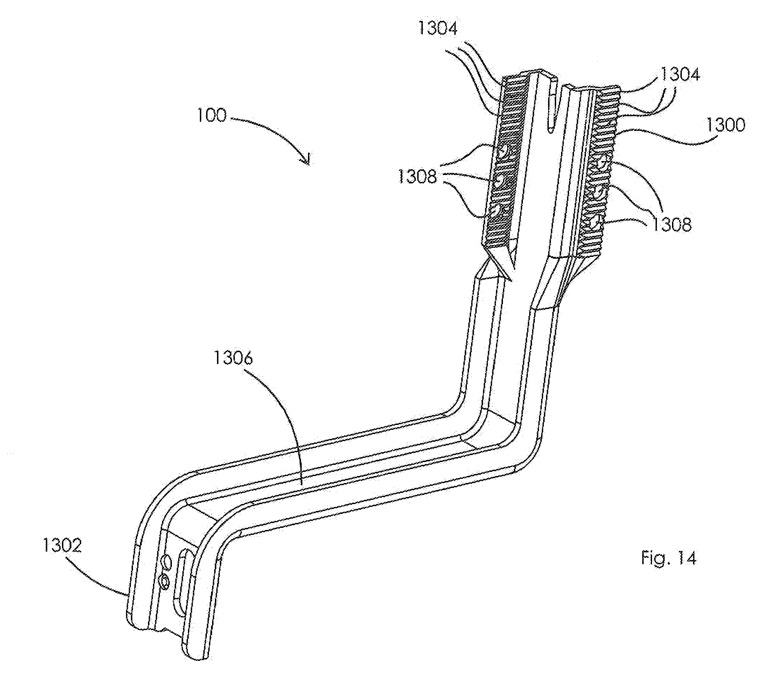

Während bei dem Haltebügel 100 gemäß Fig. 13 die Befestigungsfläche des Montageabschnitts 1300 im Wesentlichen parallel zur Befestigungsfläche des Befestigungsabschnitts 1302 angeordnet ist, sind die Befestigungsflächen des Montageschenkels 1300 und des Befestigungselements 1302 gemäß **Fig. 14** zueinander im Wesentlichen orthogonal angeordnet. Ferner sind zwei sich gegenüberliegende Oberflächenbereiche des Montageabschnitts 1300 mit Strukturmerkmalen 1304 versehen, die zu den Strukturmerkmalen 1100 der Haltebügelprofilschiene 200 korrespondierend vorgesehen sind.

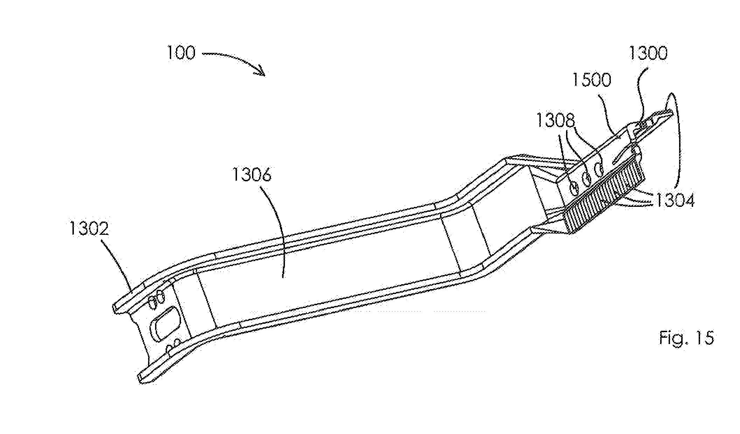

Die in **Fig. 15** gezeigte Ausführungsform des Haltebügels 100 unterscheidet sich von den Ausführungsformen gemäß Fig. 13 und Fig. 14 dadurch, dass der Montageschenkel 1300 als Winkelprofil ausgebildet ist, der an den beiden Winkelschenkeln Strukturmerkmale 1304 aufweist. Zwischen den Strukturmerkmalen 1304 und einem Kantenbereich 1500 des als Winkelprofil ausgestalteten Montageschenkels 1300 sind die Befestigungslöcher 1308 gebildet.

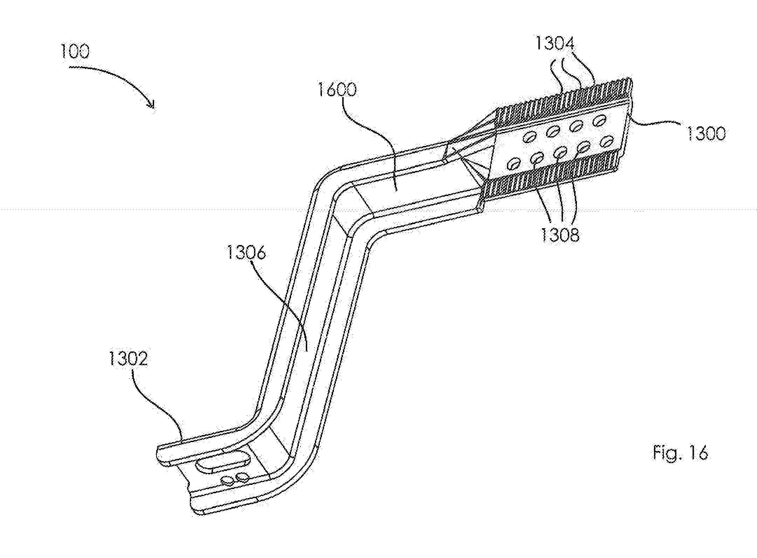

Die in **Fig. 16** gezeigte Ausführungsform eines Haltebügels 100 unterscheidet sich von jener gemäß Fig. 13 insbesondere dadurch, dass der

Montageschenkel 1300 rechtwinkelig zu einem angrenzenden flächenförmigen Abschnitt 1600 des Haltebügels 100 orientiert ist, welcher Abschnitt 1600 den Abstandshalter 1306 und den Montageabschnitt 1300 überbrückt. Hier können Querprofilschienen 702 befestigt werden.

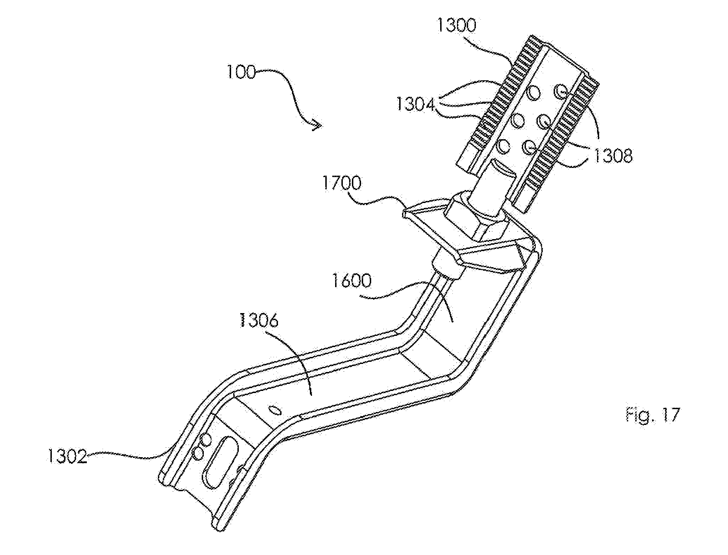

Der Haltebügel 100 gemäß **Fig. 17** unterscheidet sich von dem Haltebügel 100 gemäß Fig. 13 im Wesentlichen dadurch, dass gemäß Fig. 17 der Abschnitt 1600 sowie ein abgekanteter Plateauabschnitt 1700 vorgesehen sind, der parallel zu dem Abstandshalter 1306 verläuft.

**Fig. 18** zeigt eine räumliche Detailansicht und **Fig. 19** zeigt eine Seitenansicht des Kabelhalterungsmoduls 500.

Das Kabelhalterungsmodul 500 enthält einen Kabelhaltebereich 1800 zum Halten eines Kabels des Solarpaneels und einen Federstecker 1802 zum Anstecken an die korrespondierend zu dem Federstecker 1802 ausgestaltete Steckaufnahme 1102 der Haltebügelprofilschiene 200.

Das Kabelhalterungsmodul 500 enthält zwei mittels eines Stegs 1804 gekoppelte Hohlzylindersegmente 1806, 1808, die miteinander derart wirkverbunden sind, dass mittels Drückens eines Kabels gegen den Steg 1804 die zwei Hohlzylindersegmente 1806, 1808 zum Bilden eines umfänglich geschlossenen Kabelaufnahmebereichs verschwenkbar sind.

Fig. 19 zeigt, auf welche Weise ein Kabel 1900 gegen den Steg 1804 gedrückt wird (Pfeil 1902), um ein Umklappen der beiden Hohlzylindersegmente 1806, 1808 zu erreichen. Jedes der Hohlzylindersegmente 1806, 1808 weist einen Fortsatz 1810 auf. Die beiden Fortsätze 1810 sind konfiguriert, bei Schwenken der zwei Hohlzylindersegmente 1806, 1808 aufeinander zu (siehe Pfeile 1904), das in dem Kabelaufnahmebereich 1800 aufgenommene Kabel 1900 gemeinsam zu zentrieren.

Zusätzlich zu den beiden Hohlzylindersegmenten 1806, 1808 ist ein weiteres Hohlzylindersegment 1812 vorgesehen und mit den anderen beiden Hohlzylindersegmenten 1806, 1808 verbunden. Der Federstecker 1802 ist in einem mittigen Bereich des weiteren Hohlzylindersegments 1812 angeordnet.

**Fig. 20** zeigt eine räumliche Detailansicht und **Fig. 21** zeigt eine Seitenansicht der Querprofilschiene 702.

Diese enthält ein abgekantetes U-Profil 2002 mit daran beidseitig einstückig anschließenden Seitenstegen 2004. Stützstreben 2006 verbinden einen oberen flächigen Abschnitt des abgekanteten U-Profils 2002 quer mit einem jeweiligen der Stege 2002, so dass im Querschnitt dreieckförmige Öffnungen 2010 an gegenüberliegenden Bereichen der Querprofilschiene 702 gebildet sind. Durch die Streben 2006 und das abgekantete U-Profil 2002 ist ein Innenprofil 2000 gebildet, das mit einem Außenprofil des Schienenverbinders 400 (vgl. Bezugszeichen 2202 in Fig. 22 und Fig. 23) derart korrespondiert, dass der Schienenverbinder 400 in die Querprofilschiene 702 ein vorgebbares Stück weit einschiebbar ist.

Ferner ist an einer Oberseite des abgekanteten U-Profils 2002 eine Führungsnut 2012 gebildet, die nach Einführen des Schienenverbinders 400 in den Aufnahmeraum 2016 einen Ansatzpunkt für eine selbstbohrende, gewindeschneidende Schraube bildet, die durch das abgekantete U-Profil 2002 und durch den in einem Aufnahmeraum 2016 aufgenommenen Schienenverbinder 400 durchgebohrt werden kann, um diese beiden Komponenten aneinander zu befestigen.

In **Fig. 22** ist eine räumliche Detailansicht und in **Fig. 23** ist eine Seitenansicht des Schienenverbinders 400 gezeigt.

Dieser weist zunächst eine Führungsnut 2200 auf, die nach Anlegen des Schienenverbinders 400 an die Haltebügelprofilschiene 200 dazu dient, eine selbstbohrende und gewindeschneidende Schraube hindurchzubohren, um den Schienenverbinder 400 an der Haltebügelprofilschiene 200 zu befestigen. Hierbei dienen die korrespondierenden Strukturmerkmale 2204 des Schienenverbinders 400 und 1100 der Haltebügelprofilschiene 200 dazu, aneinander form- und reibschlüssig angelegt zu werden und nachfolgend ein Verbinden mittels der selbstbohrenden Schraube zu erleichtern.

Ferner hat der Schienenverbinder 400 ein Außenprofil 2202, das auf das Innenprofil 2000 der Querprofilschiene 702 angepasst ist, so dass der Schienenverbinder 400 in die Querprofilschiene 702 benutzerdefiniert ein vorgebbares Stück weit einführbar ist.

Somit ist es mit dem Schienenverbinder 400 möglich, sowohl eine Verbindung zu der Haltebügelprofilschiene 200 als auch zu der Querprofilschiene 702 herzustellen, so dass der Schienenverbinder 400 auch als Universalschienenverbinder bezeichnet werden kann.

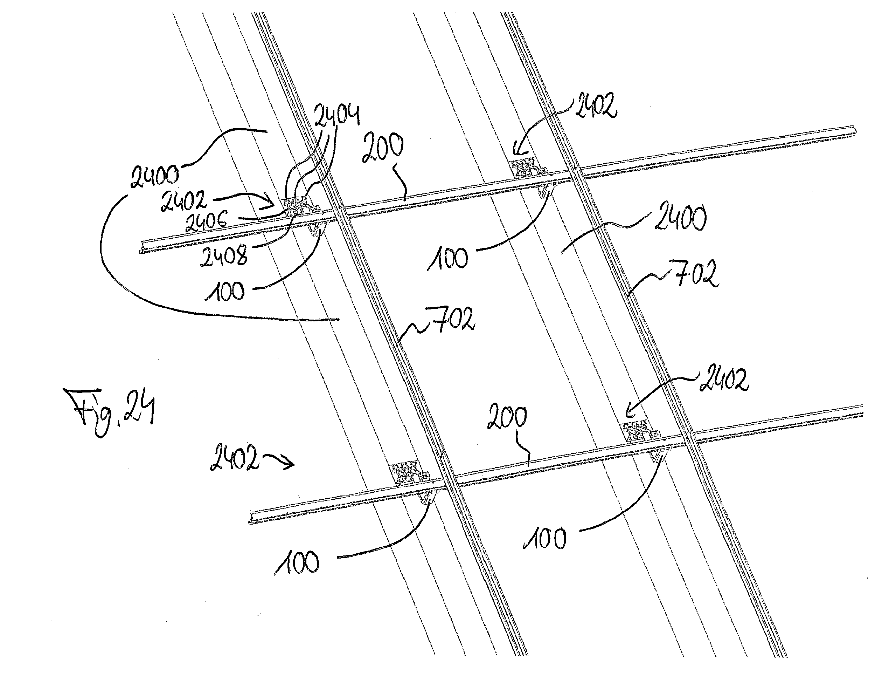

**Fig. 24** zeigt eine Anordnung, bei der an Holzdachsparren 2400 zunächst ein Bodenteil 2402 angebracht wird. Dies erfolgt mittels Holzschrauben, die in Schraubenöffnungen 2404 einer Bodenplatte 2406 des Bodenteils 2402 eingeschraubt werden. Ein sich von der Bodenplatte 2406 hin nach oben erstreckender Abschnitt 2408 dient zum Verschrauben des Bodenteils 2402 mit dem Haltebügel 100, wozu Schrauben (abhängig von den verwendeten Materialien zum Beispiel selbstbohrende und gewindeschneidende Schrauben oder Schrauben ohne selbstbohrende und gewindeschneidende Funktion) verwendet werden. Alternativ können Bodenteil 2402 und Haltebügel 100 einstückig gebildet sein. Der Haltebügel 100 wird dann mit einer Haltebügelprofilschiene 200 unter Verwendung selbstbohrender und gewindeschneidender Schrauben verschraubt. Die Haltebügelprofilschiene 200 wird nachfolgend unter Verwendung von selbstbohrenden und gewindeschneidender Schrauben mit der Querprofilschiene 702 verschraubt.

Wie **Fig. 25** zeigt, kann nachfolgend ein Solarpaneel 2500 auf der Befestigungsanordnung befestigt wird. Hierbei ist entweder eine direkte Befestigung auf den Querprofilschienen 702 oder, wie in Fig. 25 gezeigt, eine indirekte Befestigung mittels eines Überbrückungsstücks 2502 möglich, das mittels einer selbstbohrenden und gewindeschneidenden Schraube an der Querprofilschiene 702 befestigt wird und dabei befestigend auf das Solarpaneel 2500 gedrückt wird.

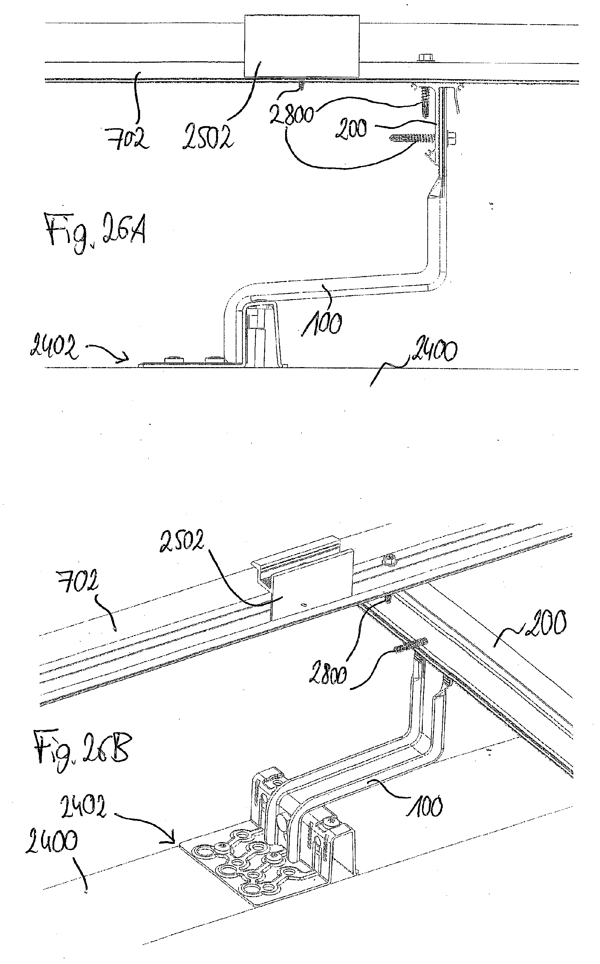

**Fig. 26** zeigt eine Detailansicht, welche exemplarisch eine Verbindung zwischen dem Haltebügel 100 und der Haltebügelprofilschiene 200 mittels einer selbstbohrenden und gewindeschneidenden Schraube 2800 zeigt. Der Bohrbereich liegt außerhalb der Komponenten.

**Fig. 27** zeigt noch einmal eine vergrößerte Ansicht des Bodenteils 2402. Dieses ist mittels Holzschrauben 2700 mit den Dachsparren 2400 und mit einer Schraube an dem Haltebügel 100 befestigt.

**Fig. 28** zeigt eine selbstbohrende und gewindeschneidende Schraube 2800, die zum Befestigen zweier beliebiger der oben beschriebenen Komponenten (Haltebügel, Profilschienen, Überbrückungsstück, Solarpaneel, Schienenverbinder) aneinander verwendet werden kann.

Die Schraube 2800 hat einen Befestigungsbereich 2802, der rostbeständig aus Edelstahl ausgebildet ist, und der im montierten Zustand im Inneren beider der anzubringenden Komponenten verbleibt. Ein Bohrbereich 2804 ist gehärtet und zum Durchbohren von mindestens einer der aneinander anzubringenden Komponenten eingerichtet. Ein Gewindeformbereich 2806 ist zwischen dem Befestigungsbereich 2802 und dem Bohrbereich 2804 angeordnet und dient zum Formen eines Gewindes in mindestens einer der aneinander anzubringenden Komponenten beim Durchbohren. Ferner hat die Schraube 2800 einen Kopfbereich 2808, an der ein Schraubendreher in üblicher Weise eingreifen kann.

**Fig. 29** zeigt eine selbstbohrende Schraube 2900, die in einer Befestigungsanordnung gemäß einem anderen Ausführungsbeispiel verwendet werden kann. Diese unterscheidet sich von der Schraube 2800 durch das Vorsehen einer Sollbruchstelle 2902 zwischen dem Kopfbereich 2808 und dem Befestigungsbereich 2802. Wie in Fig. 29 gezeigt, ist die Sollbruchstelle dünner vorgesehen als der Rest der Schraube 2900 und schert deswegen bei Überschreiten einer mechanischen Sollbelastung, insbesondere eines Mindestdrehmoments, ab, womit der Kopfbereich 2808 von dem restlichen Bereich der Schraube 2900 abtrennbar ist. Ein Betätigen der Schraube 2900 ist danach nicht mehr möglich, so dass das Abscheren als Diebstahlschutz zum Schützen vor dem unbefugten Entwenden eines montierten Solarpaneels dient. Ferner ist zwischen der Sollbruchstelle 2902 und dem Befestigungsbereich 2802 ein Aufweitungsabschnitt 2904 vorgesehen, der im montierten Zustand eine ähnliche Befestigungsfunktion erfüllt wie gemäß Fig. 28 der Kopfbereich 2808.

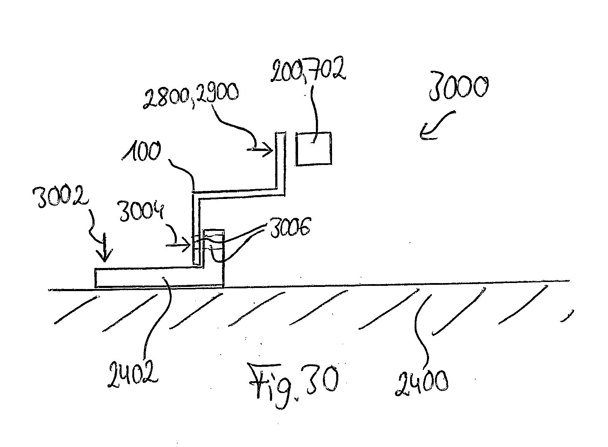

**Fig. 30** zeigt eine Befestigungsanordnung 3000 gemäß einem exemplarischen Ausführungsbeispiel der Erfindung.

Ein Bodenteil 2402, das zum Beispiel aus Edelstahl gefertigt sein kann, wird an Dachsparren 2400 mittels einer oder mehrerer Holzschrauben befestigt, wie schematisch mit Bezugszeichen 3002 gezeigt.

Ein Haltebügel 100, der zum Beispiel aus Edelstahl gefertigt sein kann, wird an dem Bodenteil 2402 mittels einer oder mehrerer Schrauben befestigt, wie schematisch mit Bezugszeichen 3004 gezeigt. Alternativ können Haltebügel 100 und Bodenteil 2402 auch einstückig ausgebildet sein. Diese Schrauben sind bei dem gezeigten Ausführungsbeispiel nicht selbstbohrend bzw. gewindeschneidend und können durch vorgeformte Bohrungen 3006 (insbesondere mit bereits geschnittenem Gewinde) durchgeführt werden. Die Befestigung des Haltebügels 100 an dem Bodenteil 2402 erfolgt bei diesem Ausführungsbeispiel nicht über eine selbstbohrende und gewindeschneidende Schraube, da beide Komponenten 100, 2402 aus Stahl gefertigt sind. Hier sind in die Komponenten 100, 2402 bereits Gewinde eingeschnitten.

Der Haltebügel 100 wird an einer in Fig. 30 schematisch gezeigten Profilschiene 200 oder 702 befestigt, wobei diese Profilschiene 200 oder 702 wahlweise eine Haltebügelprofilschiene oder eine Querprofilschiene sein kann. Zur Befestigung kann eine selbstschneidende und selbstbohrende Schraube 2800, 2900 eingesetzt werden.

Der Haltebügel 100 und das Bodenteil 2402 sind vorzugsweise entweder vormontiert oder einstückig ausgebildet, insbesondere wenn diese aus Stahl hergestellt sind. Ein Selbstbohren oder Selbstschneiden ist dann nur schwer möglich.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestigungsanordnung (700) zum Montieren mindestens eines Solarpaneels (2500) an einem Dach (2400), wobei die Befestigungsanordnung (700) aufweist:
mindestens ein Bodenteil (2402) zum Anbringen an dem Dach (2400);
mindestens einen Haltebügel (100) an dem mindestens einen Bodenteil (2402);
mindestens eine Profilschiene (200, 702) zum Anbringen an dem mindestens einen Haltebügel (100) mittels mindestens eines ersten Befestigungsmittels (2800), wobei das mindestens eine Solarpaneel (2500) mittels mindestens eines zweiten Befestigungsmittels (2800) an der mindestens einen Profilschiene (200, 702) montierbar ist;
wobei eine Mehrzahl aus der Gruppe des mindestens einen ersten Befestigungsmittels (2800) und des mindestens einen zweiten Befestigungsmittels (2800) eine selbstbohrende und vorzugsweise auch gewindeschneidende Schraube aufweist oder daraus besteht, die durch zumindest eine der jeweiligen aneinander anzubringenden Komponenten (100, 200, 702, 2500) schraubbar ist.

2. Befestigungsanordnung (700) gemäß Anspruch 1,
wobei das mindestens eine erste Befestigungsmittel (2800) eine selbstbohrende und vorzugsweise auch gewindeschneidende Schraube zum Anbringen der mindestens einen Profilschiene (200, 702) an dem mindestens einen Haltebügel (100) aufweist oder daraus besteht;
wobei das mindestens eine zweite Befestigungsmittel (2800) eine selbstbohrende und vorzugsweise auch gewindeschneidende Schraube zum Anbringen des mindestens einen Solarpaneels (2500) an der mindestens einen Profilschiene (200, 702) aufweist oder daraus besteht.

3. Befestigungsanordnung (700) gemäß Anspruch 1 oder 2, wobei die selbstbohrende und vorzugsweise auch selbstschneidende Schraube (2800) ohne eine vorherige Vorbohrung durch beide der jeweils aneinander anzubringenden Komponenten (100, 200, 702, 2500) hindurch bohrbar ist.

4. Befestigungsanordnung (700) gemäß einem der Ansprüche 1 bis 3, wobei die selbstbohrende und vorzugsweise auch gewindeschneidende Schraube (2800) :
einen Befestigungsbereich (2802), insbesondere einen rostbeständigen, hat, der im montierten Zustand innerhalb zumindest einer der aneinander anzubringenden Komponenten (100, 200, 702, 2500) verbleibt; und
einen Bohrbereich (2804), insbesondere einen gehärteten, hat, zum Durchbohren von mindestens einer der aneinander anzubringenden Komponenten (100, 200, 702, 2500).

5. Befestigungsanordnung (700) gemäß Anspruch 4, wobei die Schraube (2800) einen Gewindeformbereich (2806) zwischen dem Befestigungsbereich (2802) und dem Bohrbereich (2804) aufweist, der zum Formen eines Gewindes in mindestens einer der aneinander anzubringenden Komponenten (100, 200, 702, 2500) eingerichtet ist.

6. Befestigungsanordnung (700) gemäß einem der Ansprüche 1 bis 5, wobei die selbstbohrende und vorzugsweise auch gewindeschneidende Schraube (2800) einstoffig gefertigt ist, insbesondere aus Edelstahl.

7. Befestigungsanordnung (700) gemäß einem der Ansprüche 1 bis 6, wobei die selbstbohrende und vorzugsweise auch gewindeschneidende Schraube (2900)
einen Kopfbereich (2808) zum Angreifen eines Schraubendrehers hat; sowie
eine Sollbruchstelle (2902) hat, die zwischen dem Kopfbereich (2808) und einem restlichen Bereich der Schraube (2900) angeordnet ist und eingerichtet ist, bei Überschreitung einer vorgebbaren mechanischen Sollbelastung während des Montierens abzuscheren, womit der Kopfbereich (2808) von dem restlichen Bereich abtrennbar ist.

8. Befestigungsanordnung (700) gemäß einem der Ansprüche 1 bis 7, wobei die mindestens eine Profilschiene (200, 702)
eine erste Profilschiene (200) zum Anbringen an dem Haltebügel (100) mittels mindestens eines der ersten Befestigungsmittel (2800) umfasst; und
eine zweite Profilschiene (702), die auf der ersten Profilschiene (200) aufliegt und/oder die unter einem Winkel zur ersten Profilschiene (200) verläuft, zum Anbringen an dem Solarpaneel (2500) mittels mindestens eines der ersten Befestigungsmittel (2800) aufweist;
wobei die erste Profilschiene (200) und die zweite Profilschiene (702) aneinander mittels eines dritten Befestigungsmittels (2800) montierbar sind.

9. Befestigungsanordnung (700) gemäß Anspruch 8, aufweisend einen Schienenverbinder (400), der auf erste Profilschienen (200) und auf zweite Profilschienen (702) derart angepasst ist, dass mittels des Schienenverbinders (400) wahlweise die ersten Profilschienen (200) miteinander verbindbar sind oder die zweiten Profilschienen (702) miteinander verbindbar sind, wobei der Schienenverbinder (400) an mindestens einer der ersten Profilschienen (200) oder an mindestens einer der zweiten Profilschienen (702) mittels eines vierten Befestigungsmittels (2800) montierbar ist.

10. Befestigungsanordnung (700) gemäß einem der Ansprüche 8 oder 9, wobei an der zweiten Profilschiene (702) eine Führungsnut (2012) ausgebildet ist, welche als Ansatzpunkt für eine selbstbohrende und insbesondere gewindeschneidende Schraube (2800) zur Befestigung der zweiten Profilschiene (702) mit der ersten Profilschiene (200) und/oder mit einem Schienenverbinder (400) zum Verbinden der zweiten Profilschiene (702) mit einer weiteren zweiten Profilschiene (702) dient.

11. Befestigungsanordnung (700) gemäß einem der Ansprüche 8 bis 10, wobei zumindest eines des dritten Befestigungsmittels (2800) und des vierten Befestigungsmittels (2800) eine selbstbohrende und vorzugsweise auch gewindeschneidende Schraube, insbesondere gemäß einem der Ansprüche 4 bis 7, aufweist oder daraus besteht.

12. Verfahren zum Montieren mindestens eines Solarpaneels (2500) an einem Dach (2400), wobei das Verfahren aufweist:
Anbringen mindestens eines Bodenteils (2402) an dem Dach (2400);
wobei mindestens ein Haltebügel (100) an dem mindestens einen Bodenteil (2402) angebracht ist;
Anbringen mindestens einer Profilschiene (200, 702) an dem mindestens einen Haltebügel (100) mittels mindestens eines ersten Befestigungsmittels (2800);
Montieren des mindestens einen Solarpaneels (2500) mittels mindestens eines zweiten Befestigungsmittels (2800) an der mindestens einen Profilschiene (200, 702);
wobei eine Mehrzahl aus der Gruppe des mindestens einen ersten Befestigungsmittels (2800) und des mindestens einen zweiten Befestigungsmittels (2800) eine selbstbohrende und vorzugsweise auch gewindeschneidende Schraube aufweist oder daraus besteht, die durch zumindest eine der jeweiligen aneinander anzubringenden Komponenten (100, 200, 702, 2500) schraubbar ist.

13. Verfahren gemäß Anspruch 12, wobei als Befestigungsmittel ausschließlich selbstbohrende und vorzugsweise auch gewindeschneidende Schrauben (2800) verwendet werden.

14. Verwendung selbstbohrender und vorzugsweise auch gewindeschneidender Schrauben (2800) zum Anbringen mindestens einer Profilschiene (200, 702) an mindestens einem Haltebügel (100), und zum Montieren mindestens eines Solarpaneels (2500) an der mindestens einen Profilschiene (200, 702), wobei der mindestens eine Haltebügel (100) an mindestens einem an einem Dach (2400) montierten Bodenteil (2402) angebracht ist.

15. Verwendung nach Anspruch 14, wobei eine Befestigungsanordnung (700) gemäß einem der Ansprüche 1 bis 11 erstellt wird.
